# EUROPEAN PATENT SPECIFICATION

(11) **EP 3 504 873 B1**
(45) Date of publication and mention of the grant of the patent: **03.12.2025**
(21) Application number: 17768010.5
(22) Date of filing: 28.08.2017
(51) Int. Cl.: H04N 7/15, H04N 7/14, H04L 12/18, G06T 19/00

(54) **COMMUNICATING IN A VIRTUAL REALITY ENVIRONMENT**
KOMMUNIKATION IN EINER UMGEBUNG DER VIRTUELLEN REALITÄT
COMMUNICATION DANS UN ENVIRONNEMENT DE REALITE VIRTUELLE

(30) Priority: 29.08.2016 EP 16186141
(43) Date of publication of application: 03.07.2019
(73) Proprietor: Koninklijke KPN N.V., 3072 AP Rotterdam (NL); Nederlandse Organisatie voor toegepast- natuurwetenschappelijk onderzoek TNO, 2595 DA 's-Gravenhage (NL)
(72) Inventor: PRINS, Martin, 2564 BL The Hague (NL); STOKKING, Hans Maarten, 2292 CH Wateringen (NL); KOENEN, Robert, 3061 BC Rotterdam (NL)
(74) Representative: De Vries & Metman
(86) International application number: PCT/EP2017/071552
(87) International publication number: WO 2018/041780

(56) References cited:
- EP-A1- 3 491 781
- US-A1- 2003 234 859
- US-A1- 2011 279 629
- US-A1- 2013 076 853
- US-A1- 2015 215 351

## Description

### FIELD OF THE INVENTION

The invention relates to a method and system for facilitating multiuser communication in a Virtual Reality [VR] environment. The invention further relates to a computer program comprising instructions for causing a processor system to perform the method, to a VR device, to a server for hosting the VR environment, to a communication device, and to signalling information for the communication device.

### BACKGROUND ART

Virtual Reality (VR) involves the use of computer technology to simulate a user's physical presence in a virtual environment. Typically, VR rendering devices, also in the following simply referred to as VR devices, make use of Head Mounted Displays (HMD) to render the virtual environment to the user, although other types of VR displays and rendering techniques may be used as well, including but not limited to holography and Cave automatic virtual environments (recursive acronym CAVE).

It is known to use a VR environment, which is in the context of VR also simply referred to as 'virtual environment', for multiuser communication. In such multiuser communication, users may be represented by avatars within the virtual environment, while communicating via voice, e.g., using a microphone and speakers, and/or nonverbal communication. Examples of the latter include, but are not limited to, text-based communication, gesture-based communication, etc. Here, the term 'avatar' refers to a graphical representation of the user within the virtual environment, which may include representations as real or imaginary persons, real or abstract objects, etc.

Such VR environment-based multiuser communication is known per se, e.g., from AltspaceVR (http://altvr.com/), Improov (http://www.middlevr.com/improov/), 3D ICC (http://www.3dicc.com/), etc. It is also known to combine a VR environment with video-based communication. For example, it is known from Improov, which is said to be a 'platform for collaboration in virtual reality', to use a live camera recording of a user as an avatar in the virtual environment.

The inventors have also considered multiuser communication scenarios in which a local user accesses the virtual environment with a VR device and is recorded via a camera, with the video of the camera being provided to communication devices of remote users which may or may not be VR devices. In the latter case, the remote users may not have direct access to the virtual environment, but instead may be shown the video of the local user while communicating with the local user via voice, text, etc. Here and in the following, the terms 'local' and 'remote' are used to indicate that the communication takes place between different users who communicate electronically, e.g., via communication data. As such, the terms may, but do not need to, indicate a degree of physical separation of the users, e.g., by being located in different rooms, buildings or places.

US 2015/215351 A1 discloses methods, systems, and computer readable storage media for facilitating controlling a meeting between remote Augmented Reality (AR) and Virtual Reality (VR) participants. In a particular embodiment, a method provides, during a conference session wherein a plurality of head mounted displays (HMDs) are each worn by one of a plurality of participants, compiling first orientation information and first view information from a first HMD of the plurality of HMDs. The orientation information describes current orientation of the first HMD. Based on the first orientation information and the first view information, the method provides determining a first change to how video is presented the first HMD. Also, the method provides directing the first HMD to implement the first change.

US 2011/0279629 A1 discloses conducting a private videoconference within a videoconference. A videoconference may be established between a plurality of endpoints. Input may be received requesting the private videoconference for a plural subset of the plurality of endpoints. The private videoconference may be established between the plural subset of the plurality of endpoints. The initial videoconference may continue during the private videoconference. Private videoconference data may be transmitted only to the plural subset of endpoints of the private videoconference. The private videoconference may be sent directly between the plural subset of endpoints or may be sent via a multipoint control unit, e.g., of the initial videoconference. The private videoconference data may not be sent to the remaining endpoints of the initial videoconference.

US 2013/076853 A1 presents a system and a method for executing a virtual conference that conveys gaze information. Where there are three nodes, input from the first node indicating a gaze recipient of a first participant is received, the gaze recipient being associated with one of the second and third nodes. A virtual space is constructed in which representations of the first participant, a second participant who is associated with the second node, and a third participant who is associated with the third node are positioned in a predetermined order. The gaze angle of the first participant in the virtual space is determined based on the position of the representation of the first participant's gaze recipient in the virtual space. An image that includes the first participant looking at his gaze recipient in the virtual space, as seen from the position of the second participant in the virtual space, is generated.

### SUMMARY OF THE INVENTION

When considering the above scenarios, the inventors have recognized that a problem of multiuser communication which combines VR and video is that a remote user, to whom the video of the local user is shown, may not know that he/she is addressed by the communication of the local user. Namely, the same video may be provided simultaneously to several remote users in parallel.

It would be advantageous to obtain multiuser communication which combines VR and video and addresses the abovementioned problem.

The following aspects of the invention may involve detecting communication, or an intent of communication, from the local user to a remote user, and differently generating the communication data for the communication device of the remote user than for the communication devices of other remote users so as to signal whether a particular remote communication device is addressed by the communication.

In accordance with a first aspect of the invention, a method is provided according to claim 1 for facilitating multiuser communication in a Virtual Reality [VR] environment.

In accordance with a further aspect of the invention according to claim 7, a transitory or non-transitory computer-readable medium is provided comprising a computer program comprising instructions to cause a processor system to perform the method.

In accordance with a non-claimed example, a transitory or non-transitory computer-readable medium may be provided comprising signalling information for use by a communication device, wherein the communication device may be configured to render video associated with multiuser communication in a Virtual Reality [VR] environment based on the signalling information and the signalling information may be indicative of whether the communication device is addressed by the multiuser communication in the VR environment. In accordance with a further aspect of the invention according to claim 8, a system is provided for facilitating multiuser communication in a Virtual Reality [VR] environment.

In accordance with a further aspect of the invention according to claim 14, a server is configured as host of a Virtual Reality [VR] environment, wherein the server comprises at least the second processor of the system.

In accordance with a further aspect of the invention according to claim 15, a Virtual Reality [VR] device is configured to render a VR environment, wherein the VR device comprises at least the second processor of the system.

In accordance with a non-claimed example, a communication device may be provided which may comprise:
- an input interface configured to receive communication data representing communication in a Virtual Reality [VR] environment, the communication data comprising video and signalling information indicative of whether the communication device is addressed by communication in the VR environment; and
- a display processor configured to effect a different visual rendering, e.g., of the video, based on whether the signalling information is indicative of that the communication device is addressed by the communication from the VR device.

The above measures involve a VR device and a plurality of remote communication devices which may be, but do not need to be, VR devices themselves. These devices may be engaged in a communication session, which may involve the exchange of communication data between devices. The communication session may be associated with the VR environment in that it may represent communication which occurs within the VR environment, such as nonverbal communication between avatars. In this case, the communication data may be an integral part of data which is exchanged between the devices for purpose of participating in the VR environment, and may possibly be routed via one or more servers hosting the VR environment. However, communication data may also be separately transmitted, e.g., in case of voice data which may be directly exchanged between the respective devices.

A camera may be provided which may record the local user when participating in the communication session. For example, the camera may be directed at a face of the local user. The resulting video may, in a conventional scenario, be transmitted to each of the plurality of remote communication devices as part of the communication data between the VR device and a respective remote communication device. Here, the term 'part of' may refer to the video being sent in packets which include other types of data which is exchanged during the communication session, but also the video being sent separately, e.g., in the form of a separate video stream. In this respect, it is noted that the video may be modified before or after transmittal by image and/or video processing, e.g., to replace a HMD worn by the local user in the recorded video by synthesized images of his/her eyes, facial expressions, etc. As such, the rendered video may differ from the video originally recorded by the camera.

Communication, or an intent of communication, may be detected between the local user and at least one of the plurality of remote users. Thereby, a target user may be identified of the communication as well as a target communication device, namely the remote communication device of the target user. Such communication, or an intent of communication, may be identified on the basis of the communication data which is exchanged during the communication session. It will be appreciated that many techniques are known and may be advantageously used for identifying communication, or the intent of communication, from communication data. For example, a plurality of microphones may be used to determine the direction of the voice of the local user, which may indicate who is being addressed. Yet another example is that, if all users are represented by avatars within the VR environment, the relative position and/or relative orientation of the avatars may be used to detect such communication, or the intent of communication, between users. In addition or alternatively, voice recognition may be used to detect if a particular user is addressed by name, e.g., "*Hey Alex,* ...".

Having identified the target communication device, the communication data which is sent to the target communication device is differently generated than the communication data which is sent to the other remote communication devices. Thereby, it is signalled that the target communication device, rather than the other remote communication devices, is addressed by the communication. It is noted that while conceptually the remote user is addressed by the communication of the local user, this results in his/her communication device receiving different communication data and thus being also considered to be 'addressed by communication'.

The above measures have as effect that the target user, to whom the video of the local user is shown, may know that he/she is addressed by the communication of the local user, and/or that other remote users may know that they are not addressed by the communication of the local user. Thereby, one of the drawbacks of electronic communication is addressed, namely that various cues, which may allow a person to detect whether he/she is addressed, or is to be addressed, by communication, are obfuscated or not available. Such cues may include gaze, posture, relative position and/or relative orientation in real-life three-dimensional space, etc., and may relate to communication already taking place, e.g., in the form of verbal communication, or may be known to be indicative of the intent of communication, e.g., an establishing of eye contact. In particular, such cues may be obfuscated or not available in case the local user wears a HMD as the HMD may obfuscate parts of his/her face. Moreover, in case head tracking and/or motion tracking is used by the VR device, the local user may be positioned and/or oriented away from the camera, which may further obfuscate such cues. By signalling whether a remote communication device is addressed, or is to be addressed, by the communication, these cues may be replaced, e.g., by an explicit signal or by other means. As such, the communication between users participating in the communication session may be more intuitive, less tiring, etc.

It will be appreciated that the target communication device may change during a communication session, and that the local user may address different ones of the remote users during the communication session. In an example, such a change of target user and thus target communication device may be automatically detected, e.g., by periodically detecting communication, or the intent of communication, between the local user and any of the remote users. Thereby, different target communication devices may be identified during the course of a communication session.

The communication data is differently generated to effect a different visual rendering by the target remote communication device than by the other remote communication devices. As such, it may be signalled visually by the target communication device that the target user is addressed by the communication of the local user. Additionally or alternatively, it may be signalled visually by the other remote communication devices that the other remote users are not addressed by the communication of the local user. An advantage of such visual signalling may be that such visual signalling is noticeable while not being considered bothersome, e.g., as audio signalling may in some instances be. Also, it may give users a more prolonged or even continuous view of who is or is not addressed than a momentary audio signalling may give. However, this is not a limitation in that the visual signalling may also be presented or signalled discontinuously, e.g., be present only for a limited time when a change of target user occurs, or be presented at time intervals, e.g. every 10 seconds.

In a non-claimed example, the different visual rendering may comprise:
- a selective rendering of a graphical indicator by the target communication device to indicate that the target user is addressed;
- a selective rendering of a graphical indicator by the other remote communication devices to indicate that the other remote users are not addressed; or
- a rendering of a different graphical indicator by the target communication device than by the other remote communication devices.

A graphical indicator may be well suited for visually signalling whether a particular user is addressed by the communication of the local user.

In a non-claimed example, the graphical indicator may be included as an overlay over the video:
- before transmitting the video to the respective remote communication devices, or
- by the respective remote communication devices after receiving of the video on the basis of signalling information included in the communication data.

An advantage of including the graphical indicator in the video before transmission is that no separate signalling information is needed, nor needs to be interpreted by the respective remote communication device. An advantage of separately signalling the graphical indicator, or the fact that the graphical indicator is to be overlaid over the video, is that the signalling information may be transmitted separately from the video, e.g., by a separate device or in a separate stream. Another advantage of the latter is that control over the overlay of the graphical indicator over the video is provided to the respective remote communication device.

The communication system comprises a further camera configured to record further video of the local user, and the method further comprises:
- identifying which one of the camera and the further camera is more aligned with a face direction of the local user, thereby identifying a more aligned video and a less aligned video of the local user;
- including the more aligned video in the communication data for the target remote communication device; and
- including the less aligned video in the communication data for the other remote communication devices.

It has been recognized by the inventors that one of the reasons that remote users are unable to determine whether they are addressed by the communication of the local user is that they are provided a same video feed of the local user, namely one which typically shows the local user being oriented towards (or away from) the camera, thereby providing each of the remote users the same impression, namely that the local user is oriented towards (or away from) them and thus (not) addressing them.

By providing a further camera which may be physically displaced from the first camera, the local user may be recorded from a different angle. By detecting which of the camera is more aligned with a face direction of the local user, e.g., by using known techniques for detecting face direction, it may be determined which of the recorded videos provides the impression that the local user is facing the viewer, and which of the videos provides the impression that the local user is facing away from the viewer. By providing the former to the target communication device, and providing the latter to the remote communication devices of the other remote users, this problem may be addressed. Namely, the target user may be provided with the impression that the local user faces him/her, while the other remote users may be provided with the impression that the local user faces away. As such, a natural way of signalling that the target user is addressed by the communication of the local user may be established.

In an example, the video of the local user is post-processed after recording. Such post-processing may include the reconstruction of at least part of the face of the local user in the video, which may be hidden or obfuscated by a head mounted display worn by the local user or by another device before such post-processing. Such post-processing may also be differently for the target device than for the other remote communication devices. For example, the video for the target device may be modified to align, or more align, the eyes (gaze) and/or face of the local user with the camera direction, e.g., to create the appearance that the local user is looking into the camera. Additionally or alternatively, the video for the other remote communication devices may be modified to misalign, or more misalign, the eyes (gaze) and/or face of the local user with the camera, e.g., to create the appearance that the local user is looking away from the camera. As such, a natural way of signalling that the target user is addressed by the communication of the local user may be established.

In a non-claimed example, at least the target user may be represented in the VR environment by an avatar, and the method may further comprise:
- determining a relative orientation between the camera and a face direction of the local user;
- adjusting the VR environment, or the rendering of the VR environment by the VR device, to more align the avatar of the target user with the face direction of the local user when facing the camera.

A user of a VR device may be immersed in the virtual experience, and may not consider that he/she may face away from the camera. In particular, the camera may be obfuscated from view, e.g., by a HMD being worn by the user. As such, a video may be recorded by the camera which shows the local user at an angle. This may convey to a viewer of the video that he/she is not addressed by the local user. By determining the relative orientation between the camera and a face direction of the local user, e.g., using known techniques for face detection, the VR environment may be adjusted, or its display to the local user, such that the avatar of the target user in the virtual environment is more aligned with the camera. It has been found that the user will naturally face the avatar of the remote user he/she is addressing. As such, the local user may naturally more align his/her face with the camera, without a need for explicit and obtrusive feedback, e.g., messages such as "please face the camera". It is noted that additionally or alternatively to adjusting the VR environment, or the rendering of the VR environment by the VR device, the camera may be a moveable camera, e.g., mounted on a rail or attached to a drone, and the camera may be moved to more align the camera with the avatar of the target user in the VR environment, thereby more aligning the camera with the face direction of the local user when facing the target user. In general, the static or movable camera may be a pan/zoom/tilt camera.

In a non-claimed example, the adjusting the VR environment, or the rendering of the VR environment by the VR device, may comprise:
- rotating the VR environment including the avatar, or
- repositioning the avatar in the VR environment.

Both options, and the combination of both options, are well suited for more aligning the avatar in the virtual environment with the camera in the physical world.

In an embodiment, each of the plurality of remote users may be represented in the VR environment by a respective one of a plurality of avatars, and the identifying the target user may be performed in the VR environment on the basis of the avatars of the remote users. It has been found that, similarly to the physical world, there exist various cues within the VR environment which indicate with which one of the remote users the local user communicates, or intends to communicate. These cues may relate to the virtual representations of the users in the virtual environment, e.g., their avatars. As previously indicated, such avatars may take any suitable form, including but not limited to a rendering in the virtual environment of a video recording of the respective user. By detecting these cues, it may be more reliably determined with which one of the remote users the local user communicates, or intends to communicate.

In an embodiment, the identifying the target user may comprise at least one of:
- determining relative positions and/or relative orientations of the each of the plurality of avatars with respect to an avatar or virtual viewpoint of the local user in the VR environment, and identifying an avatar representing the target user based on the relative positions and/or the relative orientations; and
- receiving a selection of at least one of the avatars from the local user.

The relative positions and/or relative orientations of the avatars in the VR environment may be indicative of which one of the remote users the local user is communicating with, or intents to communicate with. For example, if the avatar or virtual viewpoint of the local user is positioned nearby and/or oriented towards another avatar, it is likely that the local user is communicating with, or intends to communicate with, the remote user of that other avatar. Here, the term 'virtual viewpoint' refers to a viewpoint in the virtual environment which is rendered to the local user by the VR device, and may also be referred to as a 'virtual camera' recording the view of the local user. Additionally or alternatively, the local user may manually select at least one of the avatars, e.g., for the explicit purpose of indicating which one of the remote users he/she communicates with, or intends to communicate with, or for another purpose.

In an embodiment, the identifying the avatar representing the target user may comprise at least one of:
- determining, based on the relative orientations, which one of the plurality of avatars the avatar or virtual viewpoint of the local user is facing; and
- determining, based on the relative positions, which one of the plurality of avatars is nearest to the avatar or virtual viewpoint of the local user.

In an embodiment, the receiving the selection of at least one of the avatars from the local user may comprise:
- enabling the local user to rotate the VR environment relative to the camera or rotate the plurality of avatars in the VR environment; and
- after said rotating, identifying the avatar which most faces the avatar or virtual viewpoint of the local user in the VR environment as representing the selection.

It will be appreciated by those skilled in the art that two or more of the above-mentioned embodiments, implementations, and/or aspects of the invention may be combined in any way deemed useful.

Modifications and variations of the stream modifier, the user device, the construction metadata and/or the computer program, which correspond to the described modifications and variations of the method, can be carried out by a person skilled in the art on the basis of the present description.

The invention is set out in the appended set of claims.

### BRIEF DESCRIPTION OF THE DRAWINGS

These and other aspects of the invention are apparent from and will be elucidated with reference to the embodiments described hereinafter. In the drawings,
Fig. 1A illustrates multiuser communication of a local user of a VR device and remote users of remote communication devices, with the remote users being represented by avatars in a VR environment rendered by the VR device, and a video of the local user being transmitted to and rendered by the remote communication devices;
Fig. 1B illustrates the local user communicating with a target user, with a graphical indicator which is overlaid over the video by the remote communication devices indicating whether the remote user of a particular remote communication device is addressed by the communication of the local user;
Fig. 2 shows a server providing different communication data to the remote communication devices to effect a different visual rendering of the communication data depending on whether the remote user of a particular remote communication device is addressed by the communication of the local user or not;
Fig. 3 illustrates data communication between the VR device, the server and remote communication devices which are provided different communication data;
Fig. 4 illustrates the VR device directly providing the different communication data to the remote communication devices;
Fig. 5 shows a session orchestrator signalling the remote communication devices whether a particular remote user is the target user or not;
Figs. 6-7 are each examples of different visually rendering of the communication data to indicate whether the remote user of a particular remote communication device is addressed by the communication of the local user;
Figs. 8A-8B show the rendering and/or transmission of the video of the local user being ceased to indicate that the remote user of a particular remote communication device is not addressed by the communication of the local user;
Figs. 9A-9B illustrate a problem of capturing video of a local user of a VR device, in that the local user may be misaligned with respect to camera;
Figs. 10A-10B show a further camera being used to provide a more aligned video of the local user to the remote communication device of the target user, and a less aligned video to the remote communication devices of other remote users;
Figs. 11A-11B show the local user rotating the VR environment to more align the target user in the VR environment with the camera in physical space;
Figs. 12A-12B show the VR environment being automatically rotated to more align the target user in the VR environment with the camera in physical space;
Figs. 13A-13B illustrate the target user of the communication of the local user being determined based on a proximity of a viewpoint of the local user with respect to the avatar of the target user in the VR environment;
Fig. 14 shows a system for facilitating multiuser communication;
Fig. 15 shows a communication device;
Fig. 16 shows a method for facilitating multiuser communication;
Fig. 17 shows a computer readable medium comprising non-transitory data;
Fig. 18 shows an exemplary data processing system.

It should be noted that items which have the same reference numbers in different figures, have the same structural features and the same functions, or are the same signals. Where the function and/or structure of such an item has been explained, there is no necessity for repeated explanation thereof in the detailed description.

### List of reference and abbreviations

The following list of references and abbreviations is provided for facilitating the interpretation of the drawings and shall not be construed as limiting the claims.
- 1-3: avatar of remote user of remote communication device
- 5: local user of VR device
- 10: VR environment rendered by VR device
- 15: communication between local user and target user

- 20-24: visual rendering by first remote communication device
- 30-34: visual rendering by second remote communication device
- 40-44: visual rendering by third remote communication device
- 50-52: graphical indicator

- 60: user-initiated rotation of VR environment
- 70: system-initiated rotation of VR environment

- 100: VR device
- 110: head mounted display
- 112: display and sensor data
- 120: camera
- 122: video data
- 124: further camera
- 130-134: communication data
- 140: server
- 150-156: communication data
- 160-166: remote communication device
- 170-174: locations

- 200: session orchestrator
- 202: media presentation
- 210: renderer
- 212: render data
- 220: sensor
- 222: sensor data
- 230: sensor interpreter
- 232: interpreted sensor data
- 240: user tracker
- 242: location and sensor data
- 244: tracking data
- 250: room/device detector
- 252: detection data

- 300: system for facilitating multiuser communication
- 310: input/output interface
- 320: first processor
- 330: second processor

- 400: communication device
- 410: input/output interface
- 420: display processor

- 500: method for facilitating multiuser communication
- 510: detecting communication or intent of communication
- 520: differently generating communication data

- 600: computer readable medium
- 610: data stored on computer readable medium

- 1000: exemplary data processing system
- 1002: processor
- 1004: memory element
- 1006: system bus
- 1008: local memory
- 1010: bulk storage device
- 1012: input device
- 1014: output device
- 1016: network adapter
- 1018: application

### DETAILED DESCRIPTION OF EMBODIMENTS

The following embodiments may involve detecting communication, or an intent of communication, from the local user to a remote user, and differently generating the communication data for the communication device of the remote user than for the communication devices of other remote users so as to signal whether a particular remote communication device is addressed by the communication.

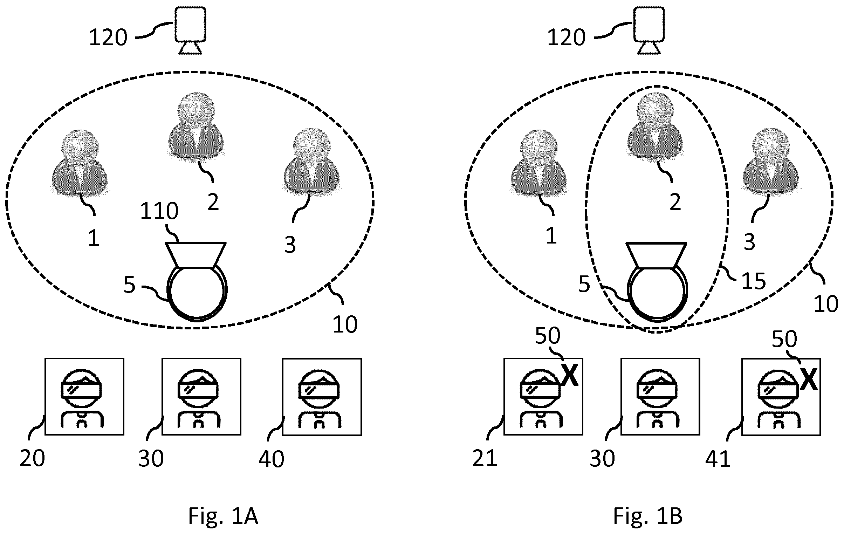

Fig. 1A illustrates multiuser communication in which a local user of a VR device communicates with remote users of remote communication devices which may be, but do not need to be, VR devices themselves. For ease of explanation, Fig. 1A and similar figures show a 'hybrid' view in which a virtual environment 10, which may be rendered to a local user 5 by a VR device (not shown), is overlaid over the physical space surrounding the local user 5. The virtual environment 10 is represented by a dashed outline having a circular shape, but may appear to the local user to have any other size and/or shape. A camera 120 may be directed at the local user 5 in physical space. In order to view the virtual environment 10, the local user 5 may wear a head mounted device 110, which may comprise, or be connected to, the VR device.

In the example of Fig. 1A, the remote users are represented by avatars 1-3 in the virtual environment 10, being in this example graphical representations of persons. Alternatively, the avatars may take any suitable shape and/or form, including but not limited to abstract symbols, photorealistic representations of the remote users, renderings of video recordings of the remote users on virtual displays in the virtual environment, etc. The virtual environment 10 may be rendered by the VR device such that it appears to have an orientation, location and/or size in the physical space which is schematically indicated by dashed outline. As such, when the local user 5 is, for example, facing the avatar 2 of one of the remote users in the VR environment 10, the local user 5 may be facing the camera 120 in the physical world. There may thus be a (known) relation between the virtual environment and the physical space.

The camera 120 may record the local user 5 in physical space. The resulting video may be transmitted to the remote communication devices of the remote users. As such, the remote users may each be presented with a video of the local user, shown schematically in Fig. 1A by a visual rendering 20 of the local user 5 being shown to the remote user represented by avatar 1 (henceforth also simply referred to as first remote user and also referred to by reference numeral 1), a visual rendering 30 being shown to the remote user represented by avatar 2 (henceforth also simply referred to as second remote user and also referred to by reference numeral 2), and a visual rendering 40 being shown to the remote user represented by avatar 3 (henceforth also simply referred to as third remote user and also referred to by reference numeral 3).

This type of illustration is maintained in Figs. 1B, 9A-10B.

As a result of the local user facing the camera 120 in the example of Fig. 1A, each of the remote users 1-3 will be shown a video of the local user 5 facing them. It will be appreciated that if the local user 5 is communicating with the second remote user 2, the visual rendering 30 may give the second remote user 2 indeed the feeling that he/she is addressed by the local user 5. However, the first remote user 1 and the third remote user 3 may also see a video of the local user 5 in which the local user 5 appears to face each of them, and thus also obtain the feeling that the local user 5 is addressing them individually. A similar situation occurs if the local user 5 is communicating with any of the other remote users 1-3, mutatis mutandis.

To address the above situation, it may be detected that the local user 5 communicates, or intends to communicate, with one of the plurality of remote users or a particular subset of the plurality of remote users. For example, it may be detected that the local user 5 is communicating with the second remote user 2, which is shown in Fig. 1B and following figures by way of a dashed outline 15 encompassing the local user 5 and the avatar 2 of the second remote user. Effectively, the second remote user 2 may represent a target user of the communication, and the remote communication device of the second remote user 2 may represent a target communication device. To signal whether a particular remote user is addressed by the communication of the local user, the communication data, which may be generated during the communication session, may be differently generated for a) the target communication device, and b) other remote communication devices of other remote users. In the example of Fig. 1B, the communication data for the remote communication devices of the first remote user 1 and the third remote user 3 may include signaling information which causes the respective remote communication devices to include an overlay 50 in the visual renderings 21, 41 of the local user 5, e.g., in the form of a cross mark 50, which may indicate that the respective remote users 1, 3 are not addressed by the local user 5. Conversely, the absence of such an overlay in the visual rendering 30 may indicate to the second remote user 2 that he/she is being addressed by the local user 5.

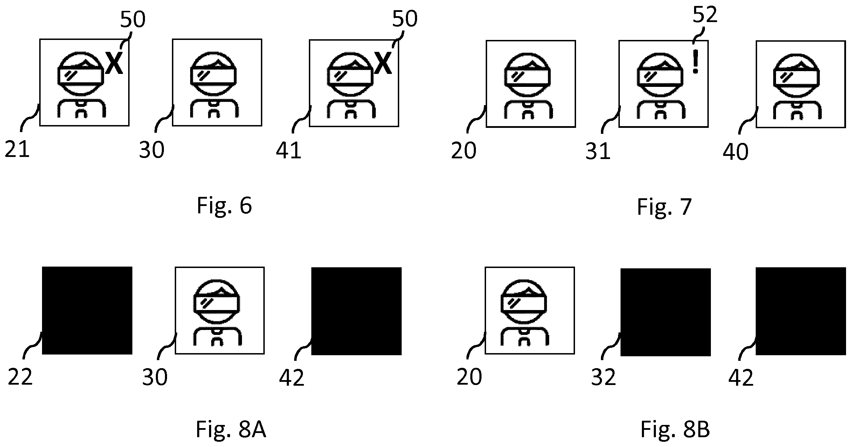

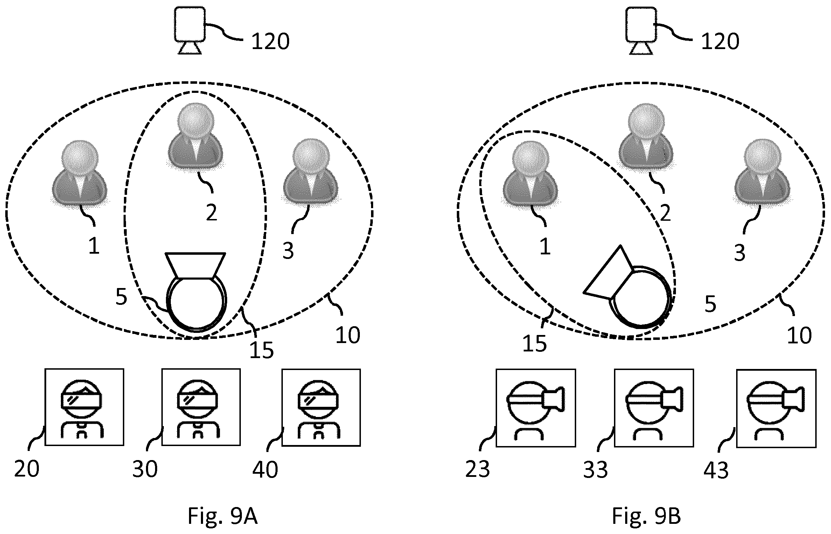

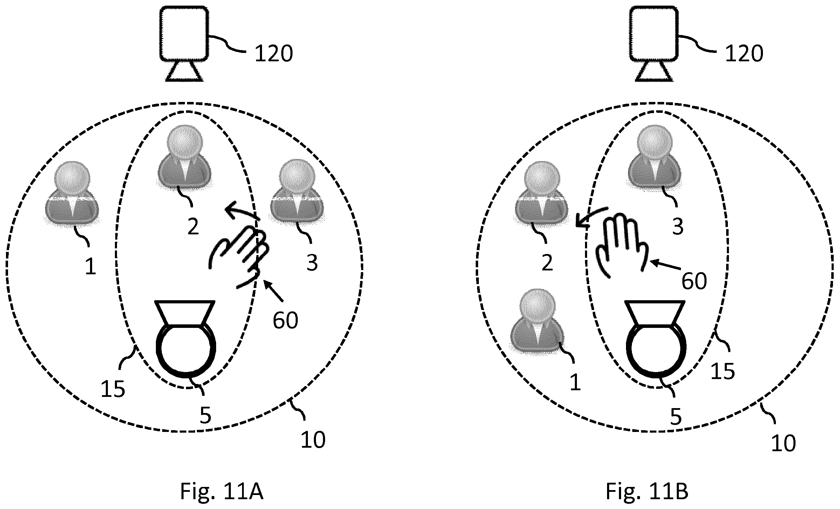

In general, the differently generating of the communication data may involve the following steps. Firstly, it may be detected with whom the local user communicates, or intends to communicate. Examples of such detection will be given with reference to Figs. 9A-11B and 13A-13B. Secondly, it may be signaled, via differently generated communication data, whether a particular remote user is addressed by the communication of the local user. Examples of such signaling will be given with reference to Figs. 6-10B. Optionally, the avatar of the remote user with whom the local user is communicating, or intends to communicate, may be positioned such in the virtual environment that the avatar is aligned with the camera in physical space. Examples of such positioning will be given with reference to Figs. 11A-12B.

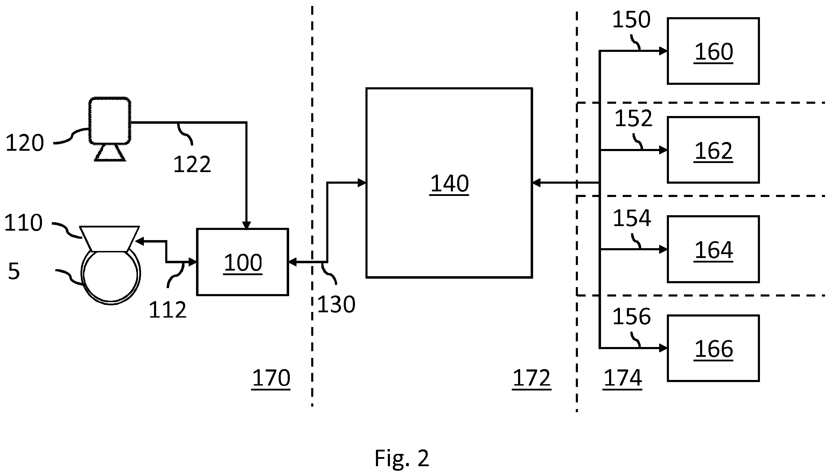

Fig. 2 illustrates the data communication between the VR device 100 and a plurality of remote communication devices 160-166. In the example of Fig. 2, the VR device 100 is shown to be connected to a head mounted display 110 worn by the local user 5. A specific example is that the VR device 100 may be represented by a personal computer or game console which is connected to a separate display or VR headset 110, e.g., of a same or similar type as the 'Oculus Rift', 'HTC Vive' or 'PlayStation VR'. Other examples of VR devices are so-termed Augmented Reality (AR) devices, such as the Microsoft HoloLens or the Google Glass goggles. Alternatively, the VR device 100 may comprise the head mounted display 110, or the VR device 100 may be integrated into the head mounted display 110. It will be appreciated that the display may not need to be head mountable, but rather, e.g., a separate holographic display.

The VR device 100 and the head mounted display 110 may communicate via data communication 112. For example, the VR device 100 may provide display data to the head mounted display 110, which may cause the head mounted display 110 to display a rendering of the VR environment to the local user 5. Moreover, the VR device 100 may receive sensor data from the head mounted display 110 to enable the VR device 100 to perform head tracking, e.g., on the basis of a measured head rotation or head movement of a user. It is noted that measuring the head rotation or head movement of a user is known per se in the art, e.g., using gyroscopes, cameras, etc. The head rotation or head movement may be measured by the head mounted display 110, e.g., on the basis of the head mounted display 110 comprising a gyroscope. Additionally or alternatively, the head rotation or head movement may be measured by the VR device 100, e.g., by the VR device 100 comprising a camera or camera input connected to an external camera such as the camera 120 recording the user, e.g., using so-termed 'outside-in' tracking, or a combination of such approaches.

By way of example, Fig. 2 shows the VR device 100 and the remote communication devices 160-166 being located at different locations 170-174, such as different rooms, buildings or places. As such, the communication between the devices may be telecommunication, e.g., involving data communication via a network such as, or including, one or more access networks and/or the Internet. In the example of Fig. 2, the data communication is shown to involve a server 140, in that the VR device 100 is shown to communicate with the server 140 via data communication 130, and each of the remote communication devices 160-166 is shown to communicate with the server 140 via respective data communication 150-156. The server 140 may be configured as host of the VR environment. Alternatively, the server 140 may be specifically configured as a server for audio and/or video communication, with other data communication relating to the VR environment taking place via another server (not shown).

In the example of Fig. 2, the server 140 may be configured to differently generate the communication data 150-156 for each of the remote communication devices 160-166 to signal whether a particular remote communication device is associated with a remote user which is addressed by the local user 5 within the VR environment. For that purpose, the server 140 may detect the communication, or the intent of communication, from the local user 5 to at least one of the plurality of remote users, e.g., on the basis of the communication data 130, 150-156. For example, if the server 140 is configured as the host of the VR environment, the server may detect such communication based on cues in the VR environment. Alternatively, the communication, or the intent of communication, may be detected by the VR device or a remote communication device, and signalled to the server 140.

Fig. 2 further shows the camera 120 being connected to, and providing the video data 122 to the VR device 100, with the VR device 100 subsequently forwarding the video data 122, or a processed version of said video data 122, to the server 140 for further communication to the remote communication devices 160-166. However, the camera 120 may also provide the video data 122 to the server 140 directly, or to another intermediate device separately from the server 140 and the VR device 100.

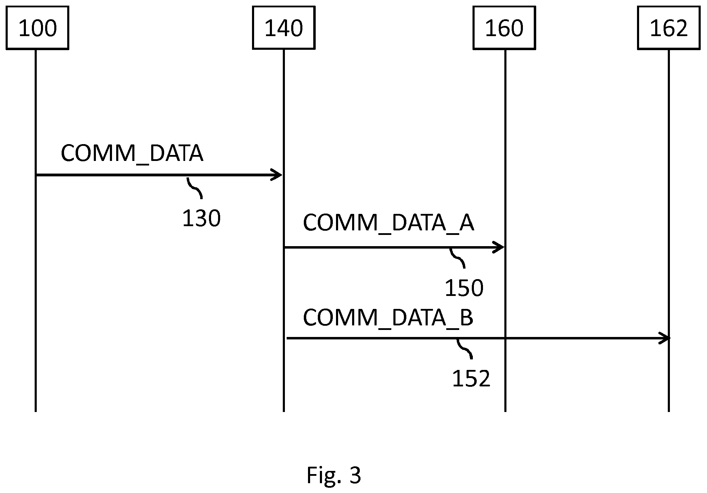

Fig. 3 illustrates data communication between the VR device 100, the server 140 and remote communication devices 160, 162. The VR device 100 is shown to provide communication data 'COMM_DATA' to the server 140 in a message 130. The communication data 130 may comprise the video data recorded by the camera, or a processed version thereof. The server 140 may then differently generate the communication data 150, 152 for each of the remote communication devices 160, 162 depending on which one of the remote communication devices is associated with a remote user addressed by the communication of the local user. For that purpose, the server 140 is shown to transmit 'COMM_DATA_A' to the remote communication device 160, and to transmit 'COMM_DATA_B' to the remote communication device 162. The communication data may differ, e.g., by comprising a different graphical indicator overlaid over the video of the local user, by comprising signalling metadata or not, etc. Other examples of such differences will be described with reference to Figs. 6-8B.

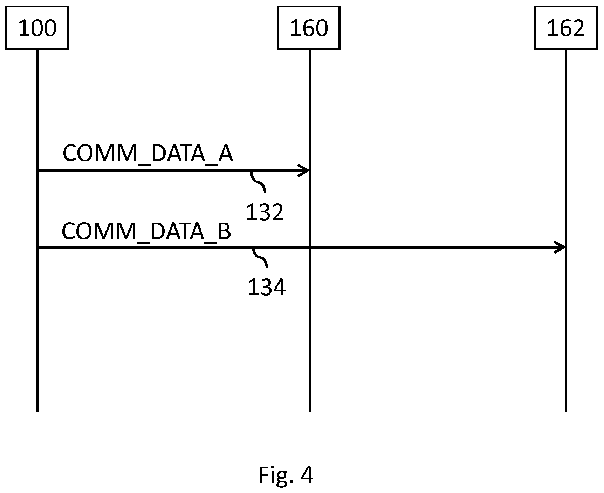

Alternatively, the VR device 100 may directly transmit such different communication data to each of the remote communication devices 160, 162. This is shown in Fig. 4, where the VR device 100 is shown to transmit 'COMM_DATA_A' in a message 132 to the remote communication device 160, and to transmit 'COMM_DATA_B' in a message 134 to the remote communication device 162.

Examples of signalling information include, but are not limited to the following. For example, a broadcast message may be transmitted in JSON format, e.g., by the VR device or the server, to all remote communication devices, e.g., via Websockets. The message may provide an 'orchestrationUpdate' which may notify all participants of communication session of the target user by user name:

```
            "orchestrationUpdate": {
                      "sessionID": "1234sadf3124",
                      "addressedUser": "Alex"
                       }
            
```

Alternatively, the target user may be identified by a user identifier:

```
                 "orchestrationUpdate": {
                      "sessionID": "1234sadf3124",
                      "intendedUserID": "1324312513"
                       }
```

Another example is a unicast message in JSON format, which may be transmitted, e.g., by the VR device or the server, to a specific remote communication device indicating whether it is being addressed. The example also shows whether an icon should be shown, and if so, which icon.

```
            "orchestrationUpdate": {
                 "sessionID": "1234sadf3124",
                 "beingAddressed": false,
                 "showIcon" : true,
                 "iconURI" : "cross.png"
                  }
```

Alternatively to 'beingAddressed', 'intendedUser: false/true' may be used.

Yet another example is that a unicast message in JSON format, which may be transmitted, e.g., by the VR device or the server, to a specific remote communication device indicating whether it is being addressed, and comprising an instruction to switch streams, e.g., to switch to the video provided to the target device to a camera which provides a more aligned view of the local user.

```
            //user is not addressed, so switch to camera 2
                 "orchestrationUpdate": {
                      "sessionID": "1234sadf3124",
                      "beingAddressed": false,
                      "switchInstruction": {
                           "switch": "true",
                           "targetStream": "camera2"
                       }
                  }
            //user is addressed, so switch to camera 1
                 "orchestrationUpdate": {
                      "sessionID": "1234sadf3124",
                      "beingAddressed": true,
                      "switchInstruction": {
                           "switch": "true",
                           "targetStream": "cameral"
                       }
                  }
```

Yet another example is a Session Description Protocol (SDP) message update, which may be transmitted, e.g., from the VR device or the server, to a target communication device, with a new SDP offer in an ongoing session. For example, the target user may be signed via a new SDP attribute 'intendedUser':

```
            v=0
            o=alice 2890844526 2890844527 IN IP4 host.example.com
            s=
            c=IN IP4 host.atlanta.example.com
            t=0 0
            m=audio 51372 RTP/AVP 0
            a=rtpmap:0 PCMU/8000
            m=video 0 RTP/AVP 31
            a=rtpmap:31 H261/90000
            a=intendedUser:false
```

Alternatively, the existing "inactive" SDP attribute may be used, e.g., as defined by the SDP definition (https://tools.ietf.org/html/rfc4566#section-5.14):

```
            v=0
            o=alice 2890844526 2890844527 IN IP4 host.example.com
            s=
            c=IN IP4 host.atlanta.example.com
            t=0 0
            m=audio 51372 RTP/AVP 0
            a=rtpmap:0 PCMU/8000
            m=video 0 RTP/AVP 31
            a=rtpmap:31 H261/90000
            a=inactive
```

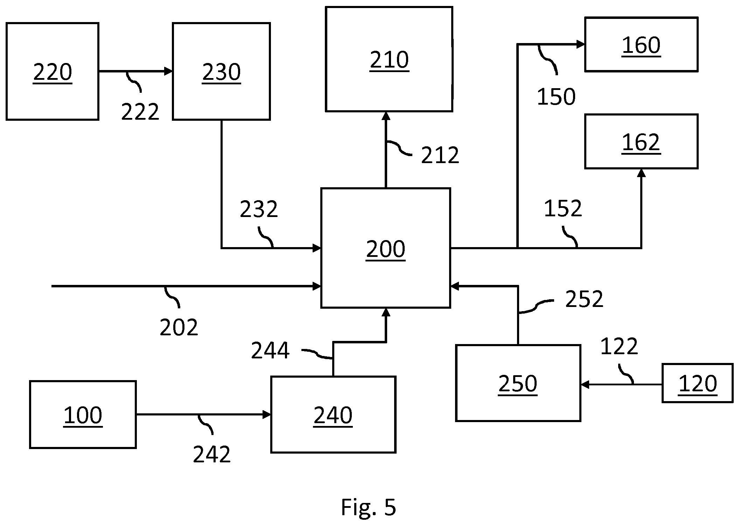

Fig. 5 shows another example in which a session orchestrator 200 is provided for signalling the remote communication devices 160, 162 whether a particular remote user is the target user or not. Such a session orchestrator 200 may be implemented in hardware, software or a combination thereof, in the VR device, in a server, or in yet another device or combination of devices. The session orchestrator 200 may be configured to detect whom the local user is addressing, optionally align the local user with the camera 120, and signal to the other users whom the local user is addressing. Input for the session orchestrator 200 may be obtained from a room/device detector 250, which may provide information about available actuators and sensors, a user tracker 240 which may indicate the location of the local user, one or more sensors 220 and a sensor interpreter 230, and data 202 representing one or more media presentations, e.g., describing a communication session between the VR device 100 and the remote communication devices 160, 162. An example of the communication session may be an audio/video session which is associated with the VR environment.

The room/device detector 250 may be configured to discover the physical location and orientation of actuators and sensors in a room, e.g., cameras, microphones, VR headsets, eligible for usage in an A/V communications session. Such detection may be provided by, e.g., network based discovery, e.g., using network protocols such as DLNA, multicast DNS, SAP, to establish the availability of devices. Additionally or alternatively, the environment may be scanned, e.g., using one or more cameras 120 to detect devices using content analysis algorithms. The cameras may be stationary, e.g., part of a laptop or TV, or mobile, e.g., a camera comprised in a smartphone or a VR headset. Additionally or alternatively, a combination of network-based discovery and scanning may be used, e.g., using the sensory input from a discovered device, e.g., a camera or microphone, to analyze its location and orientation in the physical environment, for example using pose estimation. Additionally or alternatively, the physical location and orientations may be manually configured by the user. Besides establishing their position and orientation, the room/device detector 250 may be configured to determine the device capabilities, e.g., in the form of supported media features, and their settings, e.g., whether the devices in the room are eligible for use in the A/V communications session. The room/device detector 250 may output the result of the above discovery or detection to the session orchestrator 200, e.g., in the form of detection data 252, which may comprise any of the above information encoded in a structured format, such as but not limited to a JSON message or XML description. Examples of detection data include, but are not limited to the following JSON message:

```
 {
   "rooms": [
      {
         "roomID": "4324-21433",
         "devices": [
           {
              "deviceID": "4324234-243234234",
              "deviceIP": "192.168.0.15",
              "deviceType": "sensor",
              "deviceFamily": "camera",
              "deviceInUse": false,
              "stationary": false,
              "parentDevice": false,
              "position": [
                "1.5",
                "2.0",
                "0.8"
              ],
              "orientation": [
                "0.0",
                "1.5",
                "-1"
              ],
              "capabilities": {
                "pan-tilt-zoom": true,
                "audio": {
                   "supportedFormats": [
                     "PCM",
                     "AAC",
                     "MP3",
                     "OPUS"
                   "supportedBitrates": [
                     32,
                     64,
                     128,
                     256
                   ]
                },
                "video": {
                   "supportedFormats": [
                     "RAW",
                     "MJPEG",
                     "H264",
                     "VP8",
                     "HEVC"
                   ],
                   "supportedFrameRates": [
                     15,
                     24,
                     25,
                     60
                   ],
                   "supportedResolutions": [
                     "320x240",
                     "640x480",
                     "1920x1080"
                   ]
                },
                "supportedProtocols": [
                   "webrtc",
                   "http",
                   "websocket",
                   "rtsp",
                   "udp"
                ]
              }
           },
           {
              "deviceID": "3432423-23423",
              "deviceType": "actuator",
              "deviceFamily": "speaker",
              "parentDevice": "TV",
              "parentDeviceID": "43234-45654",
              "deviceInUse": true,
              "capabilities": {
                "audio": {
                   "supportedChannels": [
                     "1.0",
                     "2.0",
                     "5.1"
                   ]
                }
              }
           }
         ]
      },
      { }
   ]
 }
```

The user tracker 240 may be configured to track the position and/or viewing direction of the user in the physical space so as to adjust his/her viewpoint in the virtual environment, and may output the tracked position and/or viewing direction in the form of tracking data 244 to the session orchestrator 200. The tracking data 244 may comprise the position and/or viewing direction of the user, e.g., in the form of an encoding of the position and/or viewing direction in a structured format. Examples of tracking data include, but are not limited to the following JSON message:

```
             {
                 "userID" : "234234-342525",
                 "timestamp" : 1472124269,
                 "location" : [2.0,0.0,1.5],
                 "bodyOrientationVector" : [0.0,1.5,2.0],
                 "headOrientationVector" : [0.0,1.5,2.0],
                 "gazeOrientationVector" : [1.0, 2.0, 3.0],
                 "headAccelerationVector" : [0.4,2.0,1.5],
                 "pose" : "sitting"
             }
```

Such tracking may involve an external device, e.g., the camera 120, or one or more sensors integrated into a user device, e.g., a smart phone or the VR device 100 itself, or a combination thereof. In the example of Fig. 5, the location and sensor data 242 is shown to be obtained from sensors comprised in the VR device 100. A sensor interpreter 230 may be provided to interpret other input from a user, e.g., as captured by sensor data 222 from a sensor 220 beyond those built into the VR device 100. Such other sensors 220 may include, e.g., controllers such as a game controller or VR controller, motion sensors such as leap motion sensor or Kinect, etc.

The session orchestrator 200 may be configured to analyze the input provided by the aforementioned modules to detect whom the VR user is addressing, and to signal this to the remote communication devices 160 of the remote users. The output of the session orchestrator 200 may be a configuration 212 or stream to a renderer 210, e.g., to cause the renderer 210 to render the VR environment to the local user. The renderer 210 may be configured to render and/or populate the virtual environment with graphical representations of the other users, possible using virtual objects such as displays which show a video feed of the respective user, etc. Other output of the session orchestrator 200 may be signalling included in communication data 150, 152 provided to the remote communication devices 160, 162.

Figs. 6-8B each show a result of the communication data being differently generated to effect a different visual rendering by the target remote communication device than by the other remote communication devices. As shown in Fig. 6, such different visual rendering may comprise a selective rendering of a graphical indicator 50 by one or more remote communication devices to indicate that the other remote users are not addressed. Namely, in the visual rendering 21 which is shown to the first remote user and in the visual rendering 41 which is shown to the third remote user, a graphical indicator 50 may be overlaid over the video of the local user to indicate to the respective remote user that he/she is not addressed by the local user. For example, the graphical indicator 50 may be an abstract symbol such as a cross mark. Other examples include text such as 'Not addressed', 'Inactive', etc.

Fig. 7 shows an alternative to Fig. 6, in that a selective rendering of a graphical indicator may be effected by the target communication device to indicate that the target user is addressed. Namely, in the visual rendering 31 shown to the target user, e.g., the second remote user, a graphical indicator 52 may be overlaid over the video of the local user to indicate to the respective user that he/she is addressed by the local user. For example, the graphical indicator 52 may be an abstract symbol such as exclamation mark. Other examples include text such as 'Addressed', 'Active', etc.

Although not shown explicitly, the examples of Figs. 6 and 7 may be combined, in that a different graphical indicator may be rendered by the target communication device than by the other remote communication devices. In general, the graphical indicator may be included as an overlay over the video before transmitting the video to the respective communication devices, e.g., by a server, the camera or the VR device itself. Alternatively, the graphical indicator may be overlaid over the video by the respective remote communication devices after receiving the video, e.g., based on signaling information included in the communication data.

Figs. 6 and 7 show an explicit signaling of whether a particular remote user is addressed. However, such signaling may also be implicit. For example, as also shown in Figs. 8A and 8B, the rendering and/or transmission of the video of the local user may be ceased to indicate that the remote user of a particular remote communication device is not addressed by the communication of the local user. Namely, in Fig. 8A, the visual rendering 30 shown to the second remote user shows the video of the local user, whereas the visual rendering 22 shown to the first remote user and the visual rendering 42 shown to the third remote user each show a blank screen rather than the video. If, during the course of communication, it is detected that the local user now addresses the first remote user, the first remote user may now be shown a visual rendering 20 comprising video of the local user whereas the second and third remote users may each be shown a blank screen, as illustrated in Fig. 8B. It will be appreciated that, instead of showing a blank screen, various other alternatives to showing the video of the local user are equally conceivable. Moreover, although Figs. 6-8B relate to a visual signaling of whether a particular remote user is addressed, such signaling may also be non-visual, e.g., by means of audio, as well as take a different visual form.

In addition to the examples of Figs. 6-8B, which provide an explicit or implicit signalling of whether a particular remote user is addressed by the local user, it may also be indicated to the remote users who are not addressed by the local user who the target user is. This may be done in various ways, including but not limited to text or a graphical indicator. For example, the text or graphical indicator may be displayed next to the avatar of the target user in the VR environment. Another example is that a graphical representation of communication may be generated in the VR environment, e.g., a line between the avatars of the local user and the target user.

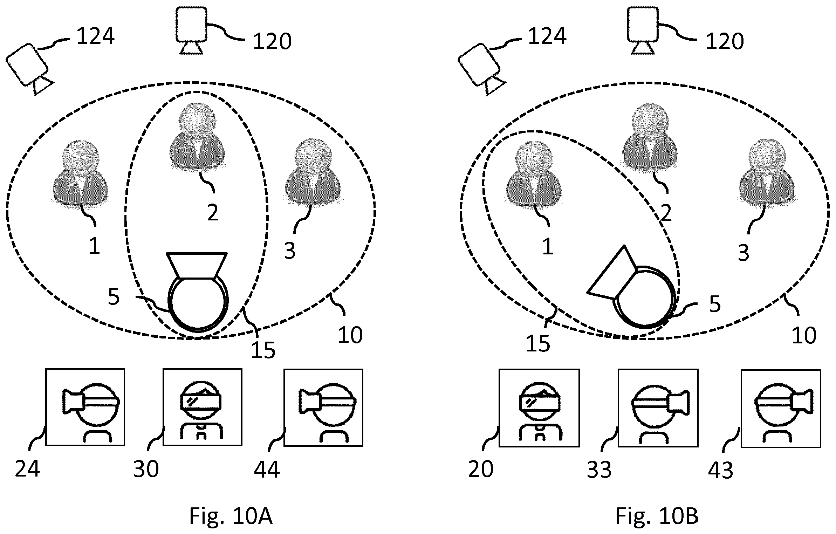

Another example is that if all communication devices transmit video of their respective users, and all of these videos are displayed to the respective users, e.g., in respective windows arranged side-by-side or on virtual displays in the VR environment, the text or graphical indicator may be overlaid over the video of the target user to indicate to the other remote users who the target user is. Yet another example is that if a video of the local user is obtained showing the local user sideways, e.g., using multiple cameras as described with reference to Figs. 10A-10B, the video of the local user may be displayed next to the video of the target user in such a way that the local user appears to face the target user. This may involve horizontal mirroring of the video of the local user, e.g., if the local user is shown to face left in the video but the video of the target user is shown at a right hand side of the video of the local user, and/or a re-ordering of the windows or virtual displays in which the videos are displayed, and/or a switching to a different video feed of the local user, e.g., showing him/her facing left.

Figs. 9A-9B illustrate a problem of capturing video of a local user of a VR device with a camera. Fig. 9A is similar to Fig. 1B, whilst for sake of explanation omitting the graphical indicator overlaid over the video. Namely, in Fig. 9A, the local user 5 is shown to communicate with the second remote user 2, e.g., as indicated by the dashed outline 15. Each remote user may be provided with a visual rendering 20, 30, 40 comprising the video of the local user 5. Since the avatar of the second remote user 2 is positioned such in the VR environment 10 that the user faces the camera 120 in the physical world when facing said avatar 2 in the VR environment 10, the video shows the local user head-on, i.e., directly facing the respective remote user. However, if the local user 5 addresses another avatar in the VR environment 10, e.g., the avatar of the first remote user 1 as shown in Fig. 9B, the local user 5 may be misaligned with respect to the camera 120. As such, the video recorded by the camera 120 may show the local user not head-on but rather at an angle. This may result in the visual renderings provided to each remote user showing the local user 5 off-angle. As a result, none of the remote users may have the feeling that the local user 5 is addressing them, e.g., not even the first remote user 1 whom is actually addressed.

To address this problem, a further camera 124 is provided which may record a further video of the local user, as shown in Fig. 10A. The further video may show the local user from a different viewpoint than the video recorded by the camera 120, e.g., more aligned or less aligned depending on the relative orientation and/or position of the local user 5 with respect to either camera 120, 124. It is identified which one of the camera and the further camera is more aligned with a face direction of the local user, thereby identifying a more aligned video and a less aligned video of the local user. Such identification may be carried out using image analysis of either video, e.g., by detecting a face direction of the local user 5 in either video. Alternatively, the relative orientation and/or position of the local user 5 with respect to either camera 120, 124 may be detected using another sensor, e.g., yet another camera, or by the room/device detector 250 and user tracker 240 as described with reference to Fig. 5.

Having identified the more aligned video and the less aligned video, the more aligned video is included in the communication data for the target remote communication device, and the less aligned video is included in the communication data for the other remote communication devices. This is illustrated in Fig. 10A in that the visual rendering for the second remote user 2 comprises the video of the camera 120 showing the local user 5 head-on, while the visual renderings 24, 44 for the first remote user 1 and for the third remote users 3 comprise the video of the further camera 124 showing the local user 5 at an angle, e.g., sideways. Similarly, if, during the course of communication, it is detected that the local user 5 now addresses the first remote user 1, the first remote user 1 may now be shown a visual rendering 20 comprising the more aligned video of the further camera 124, whereas the second and third remote users may each be shown a visual rendering 33, 43 showing the less aligned video of the camera 120. It will be appreciated that the described inclusion of a video of a different camera may represent an implicit signalling to the remote user, in that a more aligned video may signal to the remote user that he/she is addressed, while a less aligned video may signal to the remote user that he/she is not addressed.

It is noted that Figs. 9A-10B show the local user 5 addressing a remote user in the VR environment 10 by rotating his/her head. To identify the head rotation, head tracking may be used, e.g., as previously described with reference to Fig. 2. Moreover, instead of using only one further camera 124, a plurality of cameras may be used from which a 'most' aligned video may be selected. Alternatively, the camera may be a moveable camera, e.g., mounted on a rail or attached to a drone, and the camera may be moved to more align the camera with the avatar of the target user, thereby more aligning the camera with the face direction of the local user.

Figs. 11A-11B show a local user addressing a remote user by rotating the VR environment 10 including the avatars contained therein relative to the camera 120. This may comprise rotating the VR environment 10 including the avatars contained therein, rather than by rotating his/her head. Additionally or alternatively, if the camera is a movable camera of which the movement can be controlled, e.g., a camera on rails or attached to a drone, it may also comprise rotating the camera 120 with respect to the VR environment 10. As such, any reference to 'rotation of the VR environment relative to the camera' is to be understood as including a movement of the camera so as to effect this relative rotation. In the example of Figs. 11A-11B, this rotation is user-initiated and shown schematically as a hand swiping movement 60.

In particular, Fig. 11A shows the local user 5 addressing the second remote user 2, and then initiating the rotation 60 of the VR environment 10 to address the third remote user 3. Fig. 11B shows a result of the user-initiated rotation 60, in that the avatars of the remote users 1-3 have been rotated counter-clockwise relative to the camera 120 such that the local user 5 is facing the avatar of the third remote user 3 and the camera 120 in physical space. After said rotation 60, the avatar which most faces the avatar or virtual viewpoint of the local user 5 in the VR environment 10 may be identified as representing the target user, e.g., being in the example of Fig. 11B the avatar of the third remote user 3. As an alternative to this example, not the entire VR environment 10 may need to be rotated, but in general the avatars contained therein may be repositioned, e.g., by means of rotation, translation, etc. This may help preventing or reducing VR sickness, which might arise if the VR environment changes without the user actually moving. It is noted that the user input for initiating the rotation 60 may be sensed via hand tracking, e.g., using a glove with sensors or an external sensing device such as a camera (e.g., the same camera 120 or another camera), a Kinect device, a leap motion device, or a controller, e.g., a keyboard or mouse.

It will be appreciated that the mechanism shown in Figs. 11A-11B not only allows identifying which of the remote users 1-3 the local user 5 is communicating with or intends to communicate with, but also may reduce or avoid the local user 5 rotating his/her head away from the camera 120. Namely, it may be known to the local user which direction he/she needs to face in order to be aligned with the camera 120, e.g., by said direction being indicated to the local user 5 in the VR environment 10, e.g., using an arrow or any other type of visual or nonvisual indicator. As such, the local user 5 may be motivated to rotate the VR environment 10 relative to the camera, or rotate the avatars contained therein, such that the avatar of the remote user that he/she intends to communicate with is positioned in alignment with the camera 120 in physical space. By doing so, it may be ensured that the local user 5 is facing the camera 120, regardless of which of the remote users 1-3 he/she is communicating with. Moreover, additional signaling may be used, e.g., as described with reference to Figs. 6-8B, to indicate each of the remote users whether he/she is addressed by the communication of the local user 5. Alternatively, if the camera 120 is a movable camera, the camera may be automatically moved so as to more align the camera with the face direction of the local user, thereby obtaining a more aligned view of the local user.

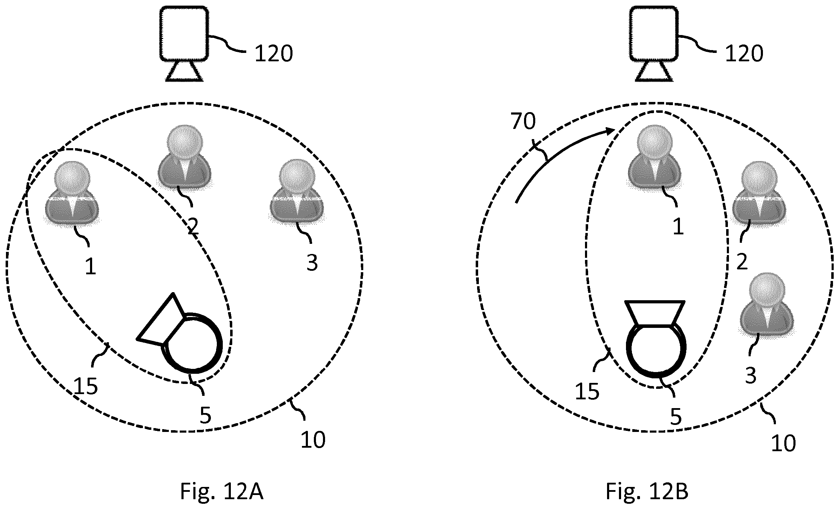

As an alternative to enabling the local user 5 to manually rotate the VR environment 10, or the avatars contained therein, such rotation may also be automatically be performed, namely in order to align the target user in the VR environment with the camera in physical space. Namely, as shown in Fig. 12A, it may be detected that the local user 5 is communicating 15 with one of the remote users, e.g., the first remote user 1. However, the avatar of the first remote user 1 may not be aligned with the camera 120 in physical space. This may cause problems similar to those shown in Fig. 9B in that the camera 120 may record the local user 5 off-angle. Instead or in addition to using a further camera, the VR environment 10 may be automatically rotated relative to the camera 120, or the avatars contained may be automatically repositioned, e.g., by means of rotation, translation, etc. such that the avatar of the target user 1 is aligned, or at least more aligned, with the camera 120 in physical space. Fig. 12B shows a result of this, in that the first remote user 1 is now aligned with the camera 120 in physical space. As such, it may be avoided that the target user is shown a sideways view of the local user 5. Moreover, as in the case of Figs. 11A-11B, additional signaling may be used, e.g., as described with reference to Figs. 6-8B, to indicate each of the remote users whether he/she is addressed by the communication of the local user 5.

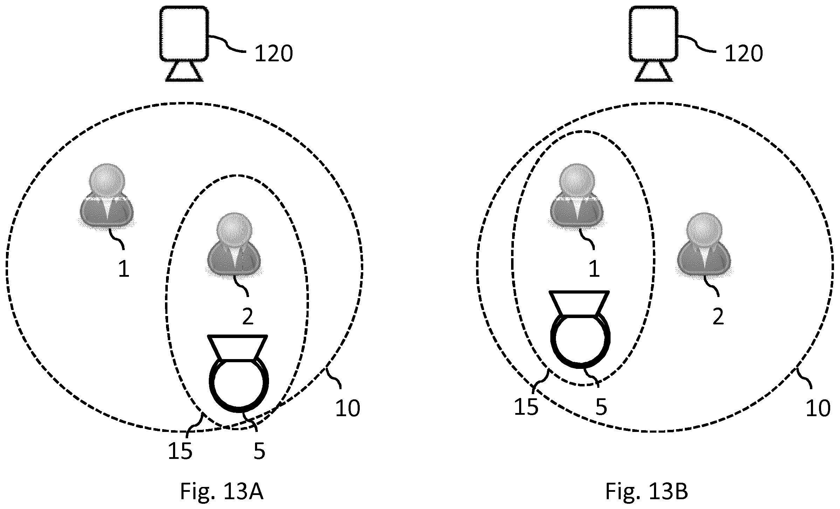

Figs. 13A-B show another example of the target user being identified on the basis of the avatars of the remote users, in that they illustrate the target user being identified based on a proximity of a viewpoint of the local user 5 with respect to the avatar of the target user in the VR environment. Namely, the local user 5 may move in the VR environment 10 or in another way change his/her viewpoint. The target user may now be identified by determining relative positions and/or relative orientations of the each of the plurality of avatars with respect to the avatar or virtual viewpoint of the local user in the VR environment, and by identifying an avatar representing the target user based on the relative positions and/or the relative orientations. In a specific example, the target user may be determined based on the relative orientations so as to identify which one of the plurality of avatars the avatar or virtual viewpoint of the local user 5 is facing. Additionally or alternatively, the target user may be determined based on the relative positions so as to identify which one of the plurality of avatars is nearest to the avatar or virtual viewpoint of the local user 5. Figs. 13A-13B show an example of the latter, in that the local user 5 is shown to move in the VR environment 10 from a position nearby the second remote user 2 to a position nearby the first remote user 1. As such, it may be detected that the local user 5 now addresses the first remote user 1.

It will be appreciated that the local user 5 may move in the VR environment in multiple ways. For example, as also illustrated in Figs. 13A-B, the local user 5 may physically move, which may be coupled to a movement of the local user 5 in the VR environment 10. This may involve tracking the movement of the local user 5 in physical space, e.g., using the camera 120, e.g., in particular when using as the camera 120 a 3D camera, or with a VR tracking system such as the tracking system of the HTC Vive, or with depth-sensing cameras such as the Kinect, or with a camera on the VR headset as used in Google's project Tango. Still other options include the use of movement or location sensors such as an accelerometer or a GPS or Wi-Fi based location system. It will be appreciated that the local user 5 may also control his/her movement in the VR environment 10 using a controller, e.g., a keyboard or mouse or game controller.

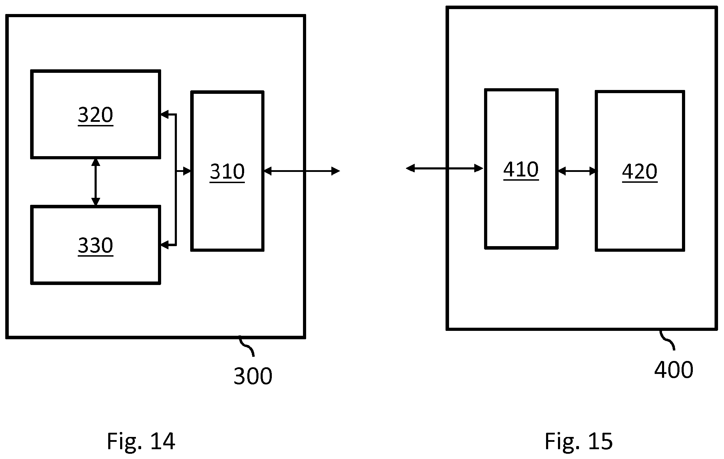

Fig. 14 shows a system 300. The system 300 comprises a first processor 320 configured to detect communication, or an intent of communication, from the local user to at least one of the plurality of remote users so as to identify a target user and thereby a target communication device of the target user, and a second processor 330 configured to differently generate the communication data for a) the target communication device, and b) other remote communication devices of other remote users, to signal whether a particular remote communication device is addressed by the communication. The system 300 is further shown to comprise an input/output interface 310, e.g., to receive data on which basis the communication may be detected, or to transmit the generated communication data. The first processor may be the same as the second processor. The system 300 may be comprised in a VR device configured to render a VR environment, in a server configured as host of the VR environment, etc.

Fig. 15 shows a communication device 400, being an example of the previously described remote communication devices. The communication device 400 may comprise an input interface 410 configured to receive communication data representing communication in a VR environment, the communication data comprising video and signalling information indicative of whether the communication device is addressed by communication in the VR environment. Moreover, the communication device 400 may comprise a display processor 420 configured to effect a different visual rendering, e.g., of the video, based on whether the signalling information is indicative of that the communication device is addressed by the communication from the VR device. Examples of communication devices 400 include, but are not limited to, televisions, monitors, projectors, media players and recorders, set-top boxes, smartphones, personal computers, laptops, tablet devices, audio systems, smart watches. The communication device 400 may also be embodied by a VR device, e.g., of Fig. 14.

In general, the system 300 and the communication device 400 may each be embodied as, or in, a device or apparatus. The device or apparatus may comprise one or more (micro)processors which execute appropriate software. The processors of the system and the communication device may be embodied by one or more of these (micro)processors. Software implementing the functionality of the system or the communication device may have been downloaded and/or stored in a corresponding memory or memories, e.g., in volatile memory such as RAM or in non-volatile memory such as Flash. Alternatively, the processors of the system or the communication device may be implemented in the device or apparatus in the form of programmable logic, e.g., as a Field-Programmable Gate Array (FPGA). Any input and/or output interfaces may be implemented by respective interfaces of the device or apparatus, such as a network interface. In general, each unit of the system or the communication device may be implemented in the form of a circuit. It is noted that the system or the communication device may also be implemented in a distributed manner, e.g., involving different devices or apparatuses. For example, the distribution of the system or the communication device may be in accordance with a client-server model.

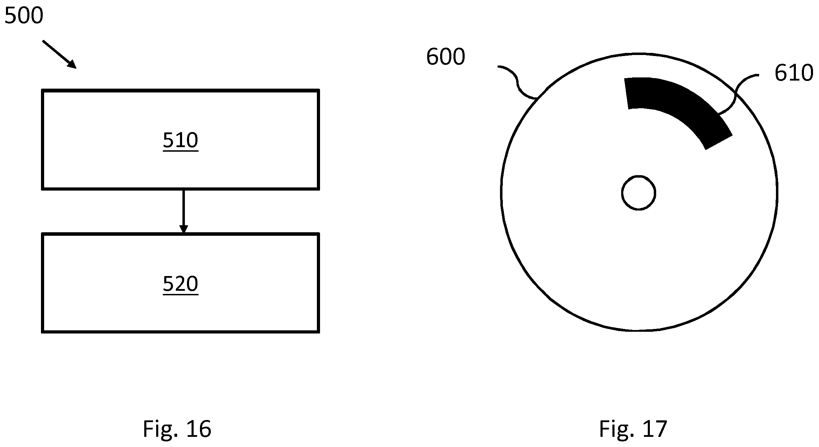

Fig. 16 shows a method 500 for facilitating multiuser communication in a Virtual Reality [VR] environment. The method 500 may comprise, in an operation titled "DETECTING COMMUNICATION OR INTENT OF COMMUNICATION", detecting 510 communication, or an intent of communication, from the local user to at least one of the plurality of remote users so as to identify a target user and thereby a target communication device of the target user. The method 500 may further comprise, in an operation titled "DIFFERENTLY GENERATING COMMUNICATION DATA", differently generating 520 the communication data for a) the target communication device, and b) other remote communication devices of other remote users, to signal whether a particular remote communication device is addressed by the communication.

The method 500 may be implemented on a computer as a computer implemented method, as dedicated hardware, or as a combination of both. As also illustrated in Fig. 17, instructions for the computer, e.g., executable code, may be stored on a computer readable medium 600, e.g., in the form of a series 610 of machine readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 17 shows an optical disc 600. With continued reference to Fig. 17, the computer readable medium 600 may alternatively or additionally comprise transitory or non-transitory data 610 representing signalling information for use by a communication device, wherein the communication device is configured to render video associated with multiuser communication in a Virtual Reality [VR] environment, and wherein the signalling information is indicative of whether the communication device is addressed by communication in the VR environment.

In general, it will be appreciated that the method or system may be configured to dynamically detect which remote user the local user is communicating with, or intends to communicate with. As such, the described differently generating of the communication data may be adjusted over time, e.g., in response to the local user addressing another remote user. For example, the signalling information may be sent to different ones of the remote communication devices in response to such a change, and/or different signalling information may be generated, etc. Moreover, although the embodiments have been described with reference to the local user addressing a single remote user, the local user may also address a subset of the plurality of remote users. The communication data may thus be differently generated for the subset of remote users than for those remote users which do not belong to the subset.

In general, the video of the local user may be post-processed after recording but before transmission to the remote communication devices, e.g., by the camera, the VR device, a server, etc. Such post-processing may include the reconstruction of at least part of the face of the local user in the video, which may be hidden or obfuscated by a head mounted display worn by the local user or by another device before such post-processing. For that purpose, techniques known per se in the art of video processing may be used, e.g., as described in the paper *'Real-time expression-sensitive HMD face reconstruction'* by Burgos-Artizzu et al, Siggraph Asia 2015. Such post-processing may also be differently for the target device than for the other remote communication devices. For example, the video for the target device may be modified to align, or more align, the eyes (gaze) and/or face of the local user with the camera direction, e.g., to create the appearance that the local user is looking into the camera. Additionally or alternatively, the video for the other remote communication devices may be modified to misalign, or more misalign, the eyes (gaze) and/or face of the local user with the camera, e.g., to create the appearance that the local user is looking away from the camera. For that purpose, techniques known per se in the art of video processing may be used, e.g., as described in the paper '*Eye Gaze Correction with a Single Webcam Based on Eye-Replacement'* by Yalun Qin et al, ISVC 2015. Additionally or alternatively, correction data representing or being indicative of such a correction may be signalled to the remote communication devices so as to enable the remote communication devices to effect the correction. For example, video data of a 'corrected' face of the local user, e.g., having more aligned eyes, may be signalled to the target device to enable the target device to overlay the corrected face over the video of the local user. Instead of being video data, this correction data may also have a different form, e.g., static image data, or by the correction data specifying parameters for video processing to be performed by a remote communication device so as to locally effect the 'correction' of the local user's eyes (gaze) and/or face.

Although the embodiments have been described with respect to the video of one user (e.g., a 'local' user), the techniques may also be applied to the video of other, or even all users involved in the multiuser communication (e.g., the 'remote' users).

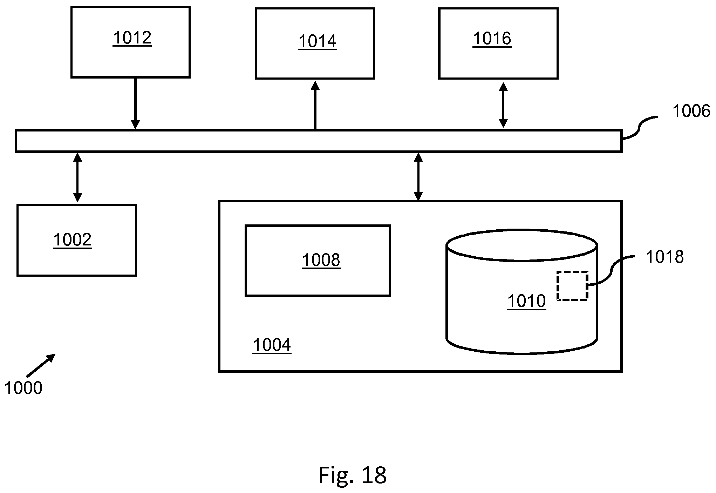

Fig. 18 is a block diagram illustrating an exemplary data processing system that may be used in the embodiments of this disclosure. Such data processing systems include data processing entities described in this disclosure, including but not limited to the VR device, the system, the server and the remote communication device.

The data processing system 1000 may include at least one processor 1002 coupled to memory elements 1004 through a system bus 1006. As such, the data processing system may store program code within memory elements 1004. Further, processor 1002 may execute the program code accessed from memory elements 1004 via system bus 1006. In one aspect, data processing system may be implemented as a computer that is suitable for storing and/or executing program code. It should be appreciated, however, that data processing system 1000 may be implemented in the form of any system including a processor and memory that is capable of performing the functions described within this specification.

Memory elements 1004 may include one or more physical memory devices such as, for example, local memory 1008 and one or more bulk storage devices 1010. Local memory may refer to random access memory or other non-persistent memory device(s) generally used during actual execution of the program code. A bulk storage device may be implemented as a hard drive, solid state disk or other persistent data storage device. The processing system 1000 may also include one or more cache memories (not shown) that provide temporary storage of at least some program code in order to reduce the number of times program code must be retrieved from bulk storage device 1010 during execution.

Input/output (I/O) devices depicted as input device 1012 and output device 1014 optionally can be coupled to the data processing system. Examples of input devices may include, but are not limited to, for example, a microphone, a keyboard, a pointing device such as a mouse, or the like. Examples of output devices may include, but are not limited to, for example, a monitor or display, speakers, or the like. Input device and/or output device may be coupled to data processing system either directly or through intervening I/O controllers. A network adapter 1016 may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system 1000.

As shown in Fig. 18, memory elements 1004 may store an application 1018. It should be appreciated that data processing system 1000 may further execute an operating system (not shown) that can facilitate execution of the application. The application, being implemented in the form of executable program code, can be executed by data processing system 1000, e.g., by processor 1002. Responsive to executing the application, the data processing system may be configured to perform one or more operations to be described herein in further detail.

In one aspect, for example, data processing system 1000 may represent a system for facilitating multiuser communication. In that case, application 1018 may represent an application that, when executed, configures data processing system 1000 to perform the various functions described herein with reference to 'system for facilitating multiuser communication'. In another aspect, data processing system 1000 may represent the server, the VR device or the remote communication device. In that case, application 1018 may represent an application that, when executed, configures data processing system 1000 to perform the various functions described herein with reference to 'server', 'VR device' and 'remote communication device'.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A method (500) for facilitating multiuser communication in a Virtual Reality [VR] environment (10), wherein the multiuser communication is based on:
- a VR device (100) configured to render the VR environment to a local user (5),
- a plurality of remote communication devices (160-166), wherein each of the plurality of remote communication devices is configured to enable a respective one of a plurality of remote users to participate in the multiuser communication, and
- a camera (120) configured to record video of the local user and to transmit the video as part of communication data to the plurality of remote communication devices for remote rendering of the video, and a further camera (124) configured to record further video of the local user,
wherein the method comprises:
- detecting (510) communication, or an intent of communication, from the local user to at least one of the plurality of remote users so as to identify a target user and thereby a target communication device of the target user;
**characterised by**:
- identifying which one of the camera and the further camera is more aligned with a face direction of the local user, thereby identifying a more aligned video and a less aligned video of the local user;
- differently generating (520) the communication data (150-156) for a) the target communication device, and b) other remote communication devices of other remote users, to signal to the target user and the other remote users whether a particular remote communication device is addressed by the communication,
wherein the communication data is differently generated to effect a different visual rendering by the target communication device than by the other remote communication devices by:
- including the more aligned video in the communication data for the target communication device; and
- including the less aligned video in the communication data for the other remote communication devices.

2. The method according to claim 1, wherein each of the plurality of remote users is represented in the VR environment by a respective one of a plurality of avatars, and wherein the identifying the target user is performed in the VR environment on the basis of the avatars of the remote users.

3. The method according to claim 2, wherein the identifying the target user comprises:
- determining relative positions and/or relative orientations of the each of the plurality of avatars with respect to an avatar or virtual viewpoint of the local user in the VR environment, and identifying an avatar representing the target user based on the relative positions and/or the relative orientations

4. The method according to claim 3, wherein the identifying the avatar representing the target user comprises at least one of:
- determining, based on the relative orientations, which one of the plurality of avatars the avatar or virtual viewpoint of the local user is facing; and
- determining, based on the relative positions, which one of the plurality of avatars is nearest to the avatar or virtual viewpoint of the local user.

5. The method according to claim 2, wherein the identifying the target user comprises:
- receiving a selection of at least one of the avatars from the local user.

6. The method according to claim 5, wherein the receiving the selection of at least one of the avatars from the local user comprises:
- enabling the local user to rotate the VR environment relative to the camera or rotate the plurality of avatars in the VR environment; and
- after said rotating, identifying the avatar which most faces the avatar or virtual viewpoint of the local user in the VR environment as representing the selection.

7. A transitory or non-transitory computer-readable medium (600) comprising a computer program, the computer program comprising instructions to cause a processor system to perform the method according to any one of claims 1 to 6.

8. A system (300) for facilitating multiuser communication in a Virtual Reality [VR] environment, wherein the multiuser communication is based on:
- a VR device (100) configured to render the VR environment to a local user,
- a plurality of remote communication devices (160-166), wherein each of the plurality of remote communication devices is configured to enable a respective one of a plurality of remote users to participate in the multiuser communication, and
- a camera (120) configured to record video of the local user and to transmit the video as part of communication data (150-156) to the plurality of remote communication devices for remote rendering of the video, and a further camera (124) configured to record further video of the local user,
wherein the system comprises:
- a first processor (320) configured to detect communication, or an intent of communication, from the local user to at least one of the plurality of remote users so as to identify a target user and thereby a target communication device of the target user; **characterised in that** the system further comprises:
- a second processor (330) configured to identify which one of the camera and the further camera is more aligned with a face direction of the local user, thereby identifying a more aligned video and a less aligned video of the local user; to differently generate the communication data for a) the target communication device, and b) other remote communication devices of other remote users, to signal to the target user and the other remote users whether a particular remote communication device is addressed by the communication, wherein the communication data is differently generated to effect a different visual rendering by the target remote communication device than by the other remote communication devices by including the more aligned video in the communication data for the target remote communication device, and including the less aligned video in the communication data for the other remote communication devices.

9. The system according to claim 8, wherein each of the plurality of remote users is represented in the VR environment by a respective one of a plurality of avatars, and wherein the identifying the target user is performed in the VR environment on the basis of the avatars of the remote users.

10. The system according claim 9, wherein the identifying the target user comprises:
- to determine relative positions and/or relative orientations of the each of the plurality of avatars with respect to an avatar or virtual viewpoint of the local user in the VR environment, and identifying an avatar representing the target user based on the relative positions and/or the relative orientations.

11. The system according to claim 10, wherein the identifying the avatar representing the target user comprises at least one of:
- to determine, based on the relative orientations, which one of the plurality of avatars the avatar or virtual viewpoint of the local user is facing; and
- to determine, based on the relative positions, which one of the plurality of avatars is nearest to the avatar or virtual viewpoint of the local user.

12. The system according to claim 9, wherein the identifying the target user comprises:
- to receive a selection of at least one of the avatars from the local user.

13. The system according to claim 12, wherein the receiving the selection of at least one of the avatars from the local user comprises:
- enabling the local user to rotate the VR environment relative to the camera or rotate the plurality of avatars in the VR environment; and
- after said rotating, to identify the avatar which most faces the avatar or virtual viewpoint of the local user in the VR environment as representing the selection.

14. A server (140) configured for use in a system (300) for facilitating multiuser communication in a Virtual Reality [VR] environment, wherein the multiuser communication is based on:
- a VR device (100) configured to render the VR environment to a local user,
- a plurality of remote communication devices (160-166), wherein each of the plurality of remote communication devices is configured to enable a respective one of a plurality of remote users to participate in the multiuser communication, and
- a camera (120) configured to record video of the local user and to transmit the video as part of communication data (150-156) to the plurality of remote communication devices for remote rendering of the video, and a further camera (124) configured to record further video of the local user,
wherein the system (300) comprises:
- a first processor (320) configured to detect communication, or an intent of communication, from the local user to at least one of the plurality of remote users so as to identify a target user and thereby a target communication device of the target user; and
- a second processor (330);
wherein the server is configured as host of the VR environment,
**characterized in that** the server comprises the second processor (330) of the system (300), wherein the second processor is configured to identify which one of the camera and the further camera is more aligned with a face direction of the local user, thereby identifying a more aligned video and a less aligned video of the local user; to differently generate the communication data for a) the target communication device, and b) other remote communication devices of other remote users, and to signal to the target user and the other remote users whether a particular remote communication device is addressed by the communication,
wherein the communication data is differently generated to effect a different visual rendering by the target remote communication device than by the other remote communication devices by including the more aligned video in the communication data for the target remote communication device, and including the less aligned video in the communication data for the other remote communication devices.

15. A Virtual Reality [VR] device (100) configured for use in a system (300) for facilitating multiuser communication in a Virtual Reality [VR] environment, wherein the multiuser communication is based on:
- the VR device (100),
- a plurality of remote communication devices (160-166), wherein each of the plurality of remote communication devices is configured to enable a respective one of a plurality of remote users to participate in the multiuser communication, and
- a camera (120) configured to record video of a local user and to transmit the video as part of communication data (150-156) to the plurality of remote communication devices for remote rendering of the video, and a further camera (124) configured to record further video of the local user,
wherein the system (300) comprises:
- a first processor (320) configured to detect communication, or an intent of communication, from the local user to at least one of the plurality of remote users so as to identify a target user and thereby a target communication device of the target user; and
- a second processor (330);
wherein the VR device (100) is configured to render the VR environment to the local user, **characterized in that** the VR device comprises the second processor (330) of the system (300), wherein the second processor is configured to identify which one of the camera and the further camera is more aligned with a face direction of the local user, thereby identifying a more aligned video and a less aligned video of the local user; to differently generate the communication data for a) the target communication device, and b) other remote communication devices of other remote users, and to signal to the target user and the other remote users whether a particular remote communication device is addressed by the communication,
wherein the communication data is differently generated to effect a different visual rendering by the target remote communication device than by the other remote communication devices by including the more aligned video in the communication data for the target remote communication device, and including the less aligned video in the communication data for the other remote communication devices.

## Patentansprüche

1. Verfahren (500) zur Ermöglichung von Mehrbenutzerkommunikation in einer Virtual-Reality-[VR]-Umgebung (10), wobei die Mehrbenutzerkommunikation basiert auf:
- einem VR-Gerät (100), das dazu konfiguriert ist, die VR-Umgebung für einen lokalen Benutzer (5) darzustellen,
- einer Mehrzahl von entfernten Kommunikationsvorrichtungen (160-166), wobei jede der Mehrzahl von entfernten Kommunikationsvorrichtungen dazu konfiguriert ist, einem jeweiligen der Mehrzahl von entfernten Benutzern die Teilnahme an der Mehrbenutzerkommunikation zu ermöglichen, und
- einer Kamera (120), die dazu konfiguriert ist, Video des lokalen Benutzers aufzuzeichnen und das Video als Teil von Kommunikationsdaten an die Mehrzahl von entfernten Kommunikationsvorrichtungen zur entfernten Darstellung des Videos zu übertragen, sowie einer weiteren Kamera (124), die dazu konfiguriert ist, weiteres Video des lokalen Benutzers aufzuzeichnen,
wobei das Verfahren umfasst:
- Erfassen (510) von Kommunikation oder einer Kommunikationsabsicht des lokalen Benutzers an wenigstens einen der Mehrzahl von entfernten Benutzern, um einen Zielbenutzer und dadurch eine Zielkommunikationsvorrichtung des Zielbenutzers zu identifizieren; **dadurch gekennzeichnet, dass** es umfasst:
- Identifizieren, welche der Kamera und der weiteren Kamera stärker mit einer Gesichtsausrichtung des lokalen Benutzers übereinstimmt, wodurch ein stärker ausgerichtetes Video und ein weniger ausgerichtetes Video des lokalen Benutzers identifiziert werden;
- unterschiedliches Erzeugen (520) der Kommunikationsdaten (150-156) für a) die Ziel-kommunikationsvorrichtung und b) andere entfernte Kommunikationsvorrichtungen anderer entfernter Benutzer, um dem Zielbenutzer und den anderen entfernten Benutzern zu signalisieren, ob eine bestimmte entfernte Kommunikationsvorrichtung durch die Kommunikation adressiert wird,
wobei die Kommunikationsdaten unterschiedlich erzeugt werden, um eine unterschiedliche visuelle Darstellung durch die Zielkommunikationsvorrichtung im Vergleich zu den anderen entfernten Kommunikationsvorrichtungen zu bewirken, indem:
- das stärker ausgerichtete Video in die Kommunikationsdaten für die Zielkommunikationsvorrichtung aufgenommen wird; und
- das weniger ausgerichtete Video in die Kommunikationsdaten für die anderen entfernten Kommunikationsvorrichtungen aufgenommen wird.

2. Verfahren nach Anspruch 1, wobei jeder der Mehrzahl von entfernten Benutzer in der VR-Umgebung durch einen jeweiligen der Mehrzahl von Avataren dargestellt wird, und wobei das Identifizieren des Zielbenutzers in der VR-Umgebung auf Grundlage der Avatare der entfernten Benutzer durchgeführt wird.

3. Verfahren nach Anspruch 2, wobei das Identifizieren des Zielbenutzers umfasst: Bestimmen relativer Positionen und/oder relativer Orientierungen jedes der Mehrzahl von Avataren in Bezug auf einen Avatar oder einen virtuellen Blickpunkt des lokalen Benutzers in der VR-Umgebung, und Identifizieren eines Avatars, der den Zielbenutzer darstellt, basierend auf den relativen Positionen und/oder relativen Orientierungen.

4. Verfahren nach Anspruch 3, wobei das Identifizieren des Avatars, der den Zielbenutzer darstellt, wenigstens eines der folgenden umfasst:
- Bestimmen, basierend auf den relativen Orientierungen, welchen der Mehrzahl von Avataren der Avatar oder der virtuelle Blickpunkt des lokalen Benutzers ansieht; und
- Bestimmen, basierend auf den relativen Positionen, welcher der Mehrzahl von Avataren dem Avatar oder dem virtuellen Blickpunkt des lokalen Benutzers am nächsten ist.

5. Verfahren nach Anspruch 2, wobei das Identifizieren des Zielbenutzers umfasst: Empfangen einer Auswahl von wenigstens einem der Avatare vom lokalen Benutzer.

6. Verfahren nach Anspruch 5, wobei das Empfangen der Auswahl von wenigstens einem der Avatare vom lokalen Benutzer umfasst:
- Ermöglichen, dass der lokale Benutzer die VR-Umgebung relativ zur Kamera oder die Mehrzahl von Avataren in der VR-Umgebung dreht; und
- nach dem Drehen Identifizieren des Avatars, der den Avatar oder den virtuellen Blickpunkt des lokalen Benutzers in der VR-Umgebung am stärksten ansieht, als Darstellung der Auswahl.

7. Flüchtiges oder nichtflüchtiges computerlesbares Medium (600), das ein Computerprogramm umfasst, wobei das Computerprogramm Anweisungen umfasst, um ein Prozessorsystem zu veranlassen, das Verfahren nach einem der Ansprüche 1 bis 6 auszuführen.

8. System (300) zur Ermöglichung von Mehrbenutzerkommunikation in einer Virtual-Reality-[VR]-Umgebung, wobei die Mehrbenutzerkommunikation basiert auf:
- einem VR-Gerät (100), das dazu konfiguriert ist, die VR-Umgebung für einen lokalen Benutzer darzustellen,
- einer Mehrzahl von entfernten Kommunikationsvorrichtungen (160-166), wobei jede der Mehrzahl von entfernten Kommunikationsvorrichtungen dazu konfiguriert ist, einem jeweiligen der Mehrzahl von entfernten Benutzern die Teilnahme an der Mehrbenutzerkommunikation zu ermöglichen, und
- einer Kamera (120), die dazu konfiguriert ist, Video des lokalen Benutzers aufzuzeichnen und das Video als Teil von Kommunikationsdaten (150-156) an die Mehrzahl von entfernten Kommunikationsvorrichtungen zur entfernten Darstellung des Videos zu übertragen, sowie einer weiteren Kamera (124), die dazu konfiguriert ist, weiteres Video des lokalen Benutzers aufzuzeichnen,
wobei das System umfasst:
- einen ersten Prozessor (320), der dazu konfiguriert ist, Kommunikation oder eine Kommunikationsabsicht des lokalen Benutzers an wenigstens einen der Mehrzahl von entfernten Benutzer zu erfassen, um einen Zielbenutzer und dadurch eine Zielkommunikationsvorrichtung des Zielbenutzers zu identifizieren;
**dadurch gekennzeichnet, dass** das System ferner umfasst:
- einen zweiten Prozessor (330), der dazu konfiguriert ist, zu identifizieren, welche der Kamera und der weiteren Kamera stärker mit einer Gesichtsausrichtung des lokalen Benutzers übereinstimmt, wodurch ein stärker ausgerichtetes Video und ein weniger ausgerichtetes Video des lokalen Benutzers identifiziert werden; die Kommunikationsdaten unterschiedlich zu erzeugen für a) die Zielkommunikationsvorrichtung und b) andere entfernte Kommunikationsvorrichtungen anderer entfernter Benutzer, um dem Zielbenutzer und den anderen entfernten Benutzern zu signalisieren, ob eine bestimmte entfernte Kommunikationsvorrichtung durch die Kommunikation adressiert wird,
wobei die Kommunikationsdaten unterschiedlich erzeugt werden, um eine unterschiedliche visuelle Darstellung durch die Zielkommunikationsvorrichtung im Vergleich zu den anderen entfernten Kommunikationsvorrichtungen zu bewirken, indem das stärker ausgerichtete Video in die Kommunikationsdaten für die Zielkommunikationsvorrichtung aufgenommen wird und das weniger ausgerichtete Video in die Kommunikationsdaten für die anderen entfernten Kommunikationsvorrichtungen aufgenommen wird.

9. System nach Anspruch 8, wobei jeder der Mehrzahl von entfernten Benutzer in der VR-Umgebung durch einen jeweiligen der Mehrzahl von Avataren dargestellt wird, und wobei das Identifizieren des Zielbenutzers in der VR-Umgebung auf Grundlage der Avatare der entfernten Benutzer durchgeführt wird.

10. System nach Anspruch 9, wobei das Identifizieren des Zielbenutzers umfasst: Bestimmen relativer Positionen und/oder relativer Orientierungen jedes der Mehrzahl von Avataren in Bezug auf einen Avatar oder einen virtuellen Blickpunkt des lokalen Benutzers in der VR-Umgebung, und Identifizieren eines Avatars, der den Zielbenutzer darstellt, basierend auf den relativen Positionen und/oder den relativen Orientierungen.

11. System nach Anspruch 10, wobei das Identifizieren des Avatars, der den Zielbenutzer darstellt, wenigstens eines der folgenden umfasst:
- Bestimmen, basierend auf den relativen Orientierungen, welchen der Mehrzahl von Avataren der Avatar oder der virtuelle Blickpunkt des lokalen Benutzers ansieht; und
- Bestimmen, basierend auf den relativen Positionen, welcher der Mehrzahl von Avataren dem Avatar oder dem virtuellen Blickpunkt des lokalen Benutzers am nächsten ist.

12. System nach Anspruch 9, wobei das Identifizieren des Zielbenutzers umfasst: Empfangen einer Auswahl von wenigstens einem der Avatare vom lokalen Benutzer.

13. System nach Anspruch 12, wobei das Empfangen der Auswahl von wenigstens einem der Avatare vom lokalen Benutzer umfasst:
- Ermöglichen, dass der lokale Benutzer die VR-Umgebung relativ zur Kamera oder die Mehrzahl von Avataren in der VR-Umgebung dreht; und
- nach dem Drehen Identifizieren des Avatars, der den Avatar oder den virtuellen Blickpunkt des lokalen Benutzers in der VR-Umgebung am stärksten ansieht, als Darstellung der Auswahl.

14. Server (140), konfiguriert zur Verwendung in einem System (300) zur Ermöglichung von Mehrbenutzerkommunikation in einer Virtual-Reality-[VR]-Umgebung, wobei die Mehrbenutzerkommunikation basiert auf:
- einem VR-Gerät (100), das dazu konfiguriert ist, die VR-Umgebung für einen lokalen Benutzer darzustellen,
- einer Mehrzahl von entfernten Kommunikationsvorrichtungen (160-166), wobei jede der Mehrzahl von entfernten Kommunikationsvorrichtungen dazu konfiguriert ist, einem jeweiligen der Mehrzahl von entfernten Benutzern die Teilnahme an der Mehrbenutzerkommunikation zu ermöglichen, und
- einer Kamera (120), die dazu konfiguriert ist, Video des lokalen Benutzers aufzuzeichnen und das Video als Teil von Kommunikationsdaten (150-156) an die Mehrzahl von entfernten Kommunikationsvorrichtungen zur entfernten Darstellung des Videos zu übertragen, sowie einer weiteren Kamera (124), die dazu konfiguriert ist, weiteres Video des lokalen Benutzers aufzuzeichnen,
wobei das System (300) umfasst:
- einen ersten Prozessor (320), der dazu konfiguriert ist, Kommunikation oder eine Kommunikationsabsicht des lokalen Benutzers an wenigstens einen der Mehrzahl von entfernten Benutzer zu erfassen, um einen Zielbenutzer und dadurch eine Zielkommunikationsvorrichtung des Zielbenutzers zu identifizieren; und
- einen zweiten Prozessor (330);
wobei der Server als Host der VR-Umgebung konfiguriert ist,
**dadurch gekennzeichnet, dass** der Server den zweiten Prozessor (330) des Systems (300) umfasst,
wobei der zweite Prozessor dazu konfiguriert ist, zu identifizieren, welche der Kamera und der weiteren Kamera stärker mit einer Gesichtsausrichtung des lokalen Benutzers übereinstimmt, wodurch ein stärker ausgerichtetes Video und ein weniger ausgerichtetes Video des lokalen Benutzers identifiziert werden; die Kommunikationsdaten unterschiedlich zu erzeugen für a) die Zielkommunikationsvorrichtung und b) andere entfernte Kommunikationsvorrichtungen anderer entfernter Benutzer, und dem Zielbenutzer und den anderen entfernten Benutzern zu signalisieren, ob eine bestimmte entfernte Kommunikationsvorrichtung durch die Kommunikation adressiert wird,
wobei die Kommunikationsdaten unterschiedlich erzeugt werden, um eine unterschiedliche visuelle Darstellung durch die Zielkommunikationsvorrichtung im Vergleich zu den anderen entfernten Kommunikationsvorrichtungen zu bewirken, indem das stärker ausgerichtete Video in die Kommunikationsdaten für die Ziel-Kommunikationsvorrichtung aufgenommen wird und das weniger ausgerichtete Video in die Kommunikationsdaten für die anderen entfernten Kommunikationsvorrichtungen aufgenommen wird.

15. Virtual-Reality-[VR]-Gerät (100), konfiguriert zur Verwendung in einem System (300) zur Ermöglichung von Mehrbenutzerkommunikation in einer Virtual-Reality-[VR]-Umgebung, wobei die Mehrbenutzerkommunikation basiert auf:
- dem VR-Gerät (100),
- einer Mehrzahl von entfernten Kommunikationsvorrichtungen (160-166), wobei jede der Mehrzahl von entfernten Kommunikationsvorrichtungen dazu konfiguriert ist, einem jeweiligen der Mehrzahl von entfernten Benutzern die Teilnahme an der Mehrbenutzerkommunikation zu ermöglichen, und
- einer Kamera (120), die dazu konfiguriert ist, Video eines lokalen Benutzers aufzuzeichnen und das Video als Teil von Kommunikationsdaten (150-156) an die Mehrzahl von entfernten Kommunikationsvorrichtungen zur entfernten Darstellung des Videos zu übertragen, sowie einer weiteren Kamera (124), die dazu konfiguriert ist, weiteres Video des lokalen Benutzers aufzuzeichnen,
wobei das System (300) umfasst:
- einen ersten Prozessor (320), der dazu konfiguriert ist, Kommunikation oder eine Kommunikationsabsicht des lokalen Benutzers an wenigstens einen der Mehrzahl von entfernten Benutzer zu erfassen, um einen Zielbenutzer und dadurch eine Zielkommunikationsvorrichtung des Zielbenutzers zu identifizieren; und
- einen zweiten Prozessor (330);
wobei das VR-Gerät (100) dazu konfiguriert ist, die VR-Umgebung für den lokalen Benutzer darzustellen,
**dadurch gekennzeichnet, dass** das VR-Gerät den zweiten Prozessor (330) des Systems (300) umfasst,
wobei der zweite Prozessor dazu konfiguriert ist, zu identifizieren, welche der Kamera und der weiteren Kamera stärker mit einer Gesichtsausrichtung des lokalen Benutzers übereinstimmt, wodurch ein stärker ausgerichtetes Video und ein weniger ausgerichtetes Video des lokalen Benutzers identifiziert werden; die Kommunikationsdaten unterschiedlich zu erzeugen für a) die Zielkommunikationsvorrichtung und b) andere entfernte Kommunikationsvorrichtungen anderer entfernter Benutzer, und dem Zielbenutzer und den anderen entfernten Benutzern zu signalisieren, ob eine bestimmte entfernte Kommunikationsvorrichtung durch die Kommunikation adressiert wird,
wobei die Kommunikationsdaten unterschiedlich erzeugt werden, um eine unterschiedliche visuelle Darstellung durch die Ziel-Kommunikationsvorrichtung im Vergleich zu den anderen entfernten Kommunikationsvorrichtungen zu bewirken, indem das stärker ausgerichtete Video in die Kommunikationsdaten für die Ziel-Kommunikationsvorrichtung aufgenommen wird und das weniger ausgerichtete Video in die Kommunikationsdaten für die anderen entfernten Kommunikationsvorrichtungen aufgenommen wird.

## Revendications

1. Procédé (500) pour faciliter une communication multi-utilisateurs dans un environnement de réalité virtuelle [VR] (10), dans lequel la communication multi-utilisateurs est basée sur :
- un dispositif VR (100) configuré pour rendre l'environnement VR à un utilisateur local (5),
- une pluralité de dispositifs de communication à distance (160-166), dans lequel chacun de la pluralité de dispositifs de communication à distance est configuré pour permettre à un utilisateur distant respectif parmi une pluralité d'utilisateurs distants de participer à la communication multi-utilisateurs, et
- une caméra (120) configurée pour enregistrer une vidéo de l'utilisateur local et pour transmettre la vidéo en tant que partie de données de communication à la pluralité de dispositifs de communication à distance pour le rendu à distance de la vidéo, et une autre caméra (124) configurée pour enregistrer une autre vidéo de l'utilisateur local,
dans lequel le procédé comprend :
- la détection (510) d'une communication, ou d'une intention de communication, de l'utilisateur local à au moins l'un de la pluralité d'utilisateurs distants de manière à identifier un utilisateur cible et donc un dispositif de communication cible de l'utilisateur cible ; **caractérisé par** :
- l'identification de laquelle parmi la caméra et l'autre caméra est plus alignée avec une direction de visage de l'utilisateur local, en identifiant ainsi une vidéo plus alignée et une vidéo moins alignée de l'utilisateur local ;
- la génération différente (520) des données de communication (150-156) pour a) le dispositif de communication cible, et b) d'autres dispositifs de communication à distance d'autres utilisateurs distants, pour signaler à l'utilisateur cible et aux autres utilisateurs distants si un dispositif de communication à distance particulier est adressé par la communication,
dans lequel les données de communication sont générées différemment pour effectuer un rendu visuel différent par le dispositif de communication cible que par les autres dispositifs de communication à distance par :
- l'inclusion de la vidéo plus alignée dans les données de communication pour le dispositif de communication cible ; et
- l'inclusion de la vidéo moins alignée dans les données de communication pour les autres dispositifs de communication à distance.

2. Procédé selon la revendication 1, dans lequel chacun de la pluralité d'utilisateurs distants est représenté dans l'environnement VR par un avatar respectif parmi une pluralité d'avatars, et dans lequel l'identification de l'utilisateur cible est effectuée dans l'environnement VR sur la base des avatars des utilisateurs distants.

3. Procédé selon la revendication 2, dans lequel l'identification de l'utilisateur cible comprend :
- la détermination de positions relatives et/ou d'orientations relatives de chacun de la pluralité d'avatars par rapport à un avatar ou un point de vue virtuel de l'utilisateur local dans l'environnement VR, et l'identification d'un avatar représentant l'utilisateur cible sur la base des positions relatives et/ou des orientations relatives

4. Procédé selon la revendication 3, dans lequel l'identification de l'avatar représentant l'utilisateur cible comprend au moins l'une parmi :
- la détermination, sur la base des orientations relatives, de celui parmi la pluralité d'avatars auquel fait face l'avatar ou le point de vue virtuel de l'utilisateur local ; et
- la détermination, sur la base des positions relatives, de celui parmi la pluralité d'avatars qui est le plus proche de l'avatar ou du point de vue virtuel de l'utilisateur local.

5. Procédé selon la revendication 2, dans lequel l'identification de l'utilisateur cible comprend :
- la réception d'une sélection d'au moins un des avatars à partir de l'utilisateur local.

6. Procédé selon la revendication 5, dans lequel la réception de la sélection d'au moins un des avatars de l'utilisateur local comprend :
- la permission à l'utilisateur local de faire tourner l'environnement VR par rapport à la caméra ou de faire tourner la pluralité d'avatars dans l'environnement VR ; et
- après ladite rotation, l'identification de l'avatar qui fait le plus face à l'avatar ou au point de vue virtuel de l'utilisateur local dans l'environnement VR comme représentant la sélection.

7. Support transitoire ou non transitoire lisible par ordinateur (600) comprenant un programme informatique, le programme informatique comprenant des instructions pour amener un système de processeur à réaliser le procédé selon l'une quelconque des revendications 1 à 6.

8. Système (300) pour faciliter une communication multi-utilisateurs dans un environnement de réalité virtuelle [VR], dans lequel la communication multi-utilisateurs est basée sur :
- un dispositif VR (100) configuré pour rendre l'environnement VR à un utilisateur local,
- une pluralité de dispositifs de communication à distance (160-166), dans lequel chacun de la pluralité de dispositifs de communication à distance est configuré pour permettre à un utilisateur distant respectif parmi une pluralité d'utilisateurs distants de participer à la communication multi-utilisateurs, et
- une caméra (120) configurée pour enregistrer une vidéo de l'utilisateur local et pour transmettre la vidéo en tant que partie de données de communication (150-156) à la pluralité de dispositifs de communication à distance pour le rendu à distance de la vidéo, et une autre caméra (124) configurée pour enregistrer une autre vidéo de l'utilisateur local,
dans lequel le système comprend :
- un premier processeur (320) configuré pour détecter une communication, ou une intention de communication, de l'utilisateur local à au moins l'un de la pluralité d'utilisateurs distants de manière à identifier un utilisateur cible et donc un dispositif de communication cible de l'utilisateur cible ;
**caractérisé en ce que** le système comprend en outre :
- un second processeur (330) configuré pour identifier laquelle parmi la caméra et l'autre caméra est plus alignée avec une direction de visage de l'utilisateur local, en identifiant ainsi une vidéo plus alignée et une vidéo moins alignée de l'utilisateur local ; générer différemment les données de communication pour a) le dispositif de communication cible, et b) d'autres dispositifs de communication à distance d'autres utilisateurs distants, pour signaler à l'utilisateur cible et aux autres utilisateurs distants si un dispositif de communication à distance particulier est adressé par la communication, dans lequel les données de communication sont générées différemment pour effectuer un rendu visuel différent par le dispositif de communication à distance cible que par les autres dispositifs de communication à distance en incluant la vidéo plus alignée dans les données de communication pour le dispositif de communication à distance cible, et en incluant la vidéo moins alignée dans les données de communication pour les autres dispositifs de communication à distance.

9. Système selon la revendication 8, dans lequel chacun de la pluralité d'utilisateurs distants est représenté dans l'environnement VR par un avatar respectif parmi une pluralité d'avatars, et dans lequel l'identification de l'utilisateur cible est effectuée dans l'environnement VR sur la base des avatars des utilisateurs distants.

10. Système selon la revendication 9, dans lequel l'identification de l'utilisateur cible comprend :
- déterminer des positions relatives et/ou des orientations relatives de chacun de la pluralité d'avatars par rapport à un avatar ou un point de vue virtuel de l'utilisateur local dans l'environnement VR, et l'identification d'un avatar représentant l'utilisateur cible sur la base des positions relatives et/ou des orientations relatives.

11. Système selon la revendication 10, dans lequel l'identification de l'avatar représentant l'utilisateur cible comprend au moins un parmi :
- déterminer, sur la base des orientations relatives, celui parmi la pluralité d'avatars auquel fait face l'avatar ou le point de vue virtuel de l'utilisateur local ; et
- déterminer, sur la base des positions relatives, celui parmi la pluralité d'avatars qui est le plus proche de l'avatar ou du point de vue virtuel de l'utilisateur local.

12. Système selon la revendication 9, dans lequel l'identification de l'utilisateur cible comprend :
- le fait de recevoir une sélection d'au moins un des avatars à partir de l'utilisateur local.

13. Système selon la revendication 12, dans lequel la réception de la sélection d'au moins un des avatars de l'utilisateur local comprend :
- la permission à l'utilisateur local de faire tourner l'environnement VR par rapport à la caméra ou de faire tourner la pluralité d'avatars dans l'environnement VR ; et
- après ladite rotation, le fait d'identifier l'avatar qui fait le plus face à l'avatar ou au point de vue virtuel de l'utilisateur local dans l'environnement VR comme représentant la sélection.

14. Serveur (140) configuré pour être utilisé dans un système (300) pour faciliter une communication multi-utilisateurs dans un environnement de réalité virtuelle [VR], dans lequel la communication multi-utilisateurs est basée sur :
- un dispositif VR (100) configuré pour rendre l'environnement VR à un utilisateur local,
- une pluralité de dispositifs de communication à distance (160-166), dans lequel chacun de la pluralité de dispositifs de communication à distance est configuré pour permettre à un utilisateur distant respectif parmi une pluralité d'utilisateurs distants de participer à la communication multi-utilisateurs, et
- une caméra (120) configurée pour enregistrer une vidéo de l'utilisateur local et pour transmettre la vidéo en tant que partie de données de communication (150-156) à la pluralité de dispositifs de communication à distance pour le rendu à distance de la vidéo, et une autre caméra (124) configurée pour enregistrer une autre vidéo de l'utilisateur local,
dans lequel le système (300) comprend :
- un premier processeur (320) configuré pour détecter une communication, ou une intention de communication, de l'utilisateur local à au moins l'un de la pluralité d'utilisateurs distants de manière à identifier un utilisateur cible et donc un dispositif de communication cible de l'utilisateur cible ; et
- un second processeur (330) ;
dans lequel le serveur est configuré comme hôte de l'environnement VR,
**caractérisé en ce que** le serveur comprend le second processeur (330) du système (300), dans lequel le second processeur est configuré pour identifier laquelle parmi la caméra et l'autre caméra est plus alignée avec une direction de visage de l'utilisateur local, en identifiant ainsi une vidéo plus alignée et une vidéo moins alignée de l'utilisateur local ; générer différemment les données de communication pour a) le dispositif de communication cible, et b) d'autres dispositifs de communication à distance d'autres utilisateurs distants, pour signaler à l'utilisateur cible et aux autres utilisateurs distants si un dispositif de communication à distance particulier est adressé par la communication,
dans lequel les données de communication sont générées différemment pour effectuer un rendu visuel différent par le dispositif de communication à distance cible que par les autres dispositifs de communication à distance en incluant la vidéo plus alignée dans les données de communication pour le dispositif de communication à distance cible, et en incluant la vidéo moins alignée dans les données de communication pour les autres dispositifs de communication à distance.

15. Dispositif de réalité virtuelle [VR] (100) configuré pour être utilisé dans un système (300) pour faciliter une communication multi-utilisateurs dans un environnement de réalité virtuelle [VR], dans lequel la communication multi-utilisateurs est basée sur :
- le dispositif VR (100),
- une pluralité de dispositifs de communication à distance (160-166), dans lequel chacun de la pluralité de dispositifs de communication à distance est configuré pour permettre à un utilisateur distant respectif parmi une pluralité d'utilisateurs distants de participer à la communication multi-utilisateurs, et
- une caméra (120) configurée pour enregistrer une vidéo d'un utilisateur local et pour transmettre la vidéo en tant que partie de données de communication (150-156) à la pluralité de dispositifs de communication à distance pour le rendu à distance de la vidéo, et une autre caméra (124) configurée pour enregistrer une autre vidéo de l'utilisateur local,
dans lequel le système (300) comprend :
- un premier processeur (320) configuré pour détecter une communication, ou une intention de communication, de l'utilisateur local à au moins l'un de la pluralité d'utilisateurs distants de manière à identifier un utilisateur cible et donc un dispositif de communication cible de l'utilisateur cible ; et
- un second processeur (330) ;
dans lequel le dispositif VR (100) est configuré pour rendre l'environnement VR à l'utilisateur local,
**caractérisé en ce que** le dispositif VR comprend le second processeur (330) du système (300), dans lequel le second processeur est configuré pour identifier laquelle parmi la caméra et l'autre caméra est plus alignée avec une direction de visage de l'utilisateur local, en identifiant ainsi une vidéo plus alignée et une vidéo moins alignée de l'utilisateur local ; générer différemment les données de communication pour a) le dispositif de communication cible, et b) d'autres dispositifs de communication à distance d'autres utilisateurs distants, et pour signaler à l'utilisateur cible et aux autres utilisateurs distants si un dispositif de communication à distance particulier est adressé par la communication,
dans lequel les données de communication sont générées différemment pour effectuer un rendu visuel différent par le dispositif de communication à distance cible que par les autres dispositifs de communication à distance en incluant la vidéo plus alignée dans les données de communication pour le dispositif de communication à distance cible, et en incluant la vidéo moins alignée dans les données de communication pour les autres dispositifs de communication à distance.
